# EUROPÄISCHE PATENTSCHRIFT

(11) **EP 3 608 854 B1**
(45) Veröffentlichungstag und Bekanntmachung des Hinweises auf die Patenterteilung: **02.08.2023**
(21) Anmeldenummer: 19190217.0
(22) Anmeldetag: 06.08.2019
(51) Int. Cl.: G06Q 10/10, G06Q 50/20, G09B 7/02

(54) **SYSTEM UND VERFAHREN FÜR COMPUTERGESTÜTZTE, DIGITALE PRÜFUNGEN**
SYSTEM AND METHOD FOR COMPUTER-BASED DIGITAL EXAMS
SYSTÈME ET PROCÉDÉ POUR EXAMENS NUMÉRIQUES SUR ORDINATEUR

(30) Priorität: 08.08.2018 DE 102018119302
(43) Veröffentlichungstag der Anmeldung: 12.02.2020
(73) Patentinhaber: Hochschule München, 80335 München (DE)
(72) Erfinder: BRAUN, Georg, 83607 Holzkirchen (DE)
(74) Vertreter: Lehmann, Horst Michael

(56) Entgegenhaltungen:
- DE-U1-202018 103 078
- US-A1- 2007 117 083
- US-B1- 9 105 194
- Michael Vogt ET AL: "E-Klausuren an Hochschulen", , 31. Dezember 2009 (2009-12-31), XP055620636, Gefunden im Internet: URL:http://geb.uni-giessen.de/geb/volltext e/2009/6890/pdf/VogtMichael-2009-02-20.pdf [gefunden am 2019-09-10]

## Beschreibung

### Gebiet der Erfindung

Die Erfindung betrifft ein Computersystem, das einen Server und mindestens einen Prüfungsrechner aufweist. Des Weiteren betrifft die Erfindung ein Verfahren zum Bereitstellen einer vordefinierten Desktopumgebung auf mindestens einem Prüfungsrechner in einem Computersystem. Darüber hinaus betrifft die Erfindung ein Verfahren zum Vorbereiten einer computergestützten Prüfung in einem Computersystem.

### Hintergrund der Erfindung

Es existieren bereits verschiedene Systeme, über die Prüfungen mit Hilfe von Computern durchgeführt werden können. Meist werden dabei Stift und Papier durch Maus, Tastatur und Anzeigeeinheit wie beispielsweise Monitor oder Display ersetzt. Beispiele hierfür sind die Lehrplattformen Moodle oder OLAT oder der Safe Exam Browser.

Das US-Patent US 9 105 194 B1 beschreibt ein elektronisches Prüfungssystem für den Bildungsbereich. Durch die Ausführung einer Prüfungsdatei auf einem Studentengerät werden Prüfungsfragen angezeigt. Eingaben von Studenten werden in Antworten übersetzt. Antwortdaten, die eine oder mehrere Antworten und eine Studentenkennung identifizieren, können während eines Prüfungszeitraums oder am Ende des Prüfungszeitraums vom Studentengerät auf ein anderes Gerät übertragen werden. Die Übertragung kann jedoch explizit oder funktional von der Stärke der Netzverbindung, der Netzverfügbarkeit usw. abhängig gemacht werden. Wenn diese Bedingung nicht erfüllt ist oder wenn eine Übertragung fehlschlägt, werden die Antwortdaten lokal und sicher auf dem Studentengerät zwischengespeichert. Die Antwort(en) wird (werden) sofort oder am Ende eines Prüfungszeitraums gesperrt, so dass ein studentischer Benutzer die Antwort(en) nicht mehr ändern kann. Das Studentengerät überträgt anschließend die Antwortdaten (z.B. wenn die Übertragungsbedingung erfüllt ist).

In der Veröffentlichung "E-Klausuren an Hochschulen" von Michael Vogt und Stefan Schneider vom 31. Dezember 2009, abrufbar über die URL http://qeb.uni-giessen.de/geb/volltexte/2009/6890/pdf/VogtMichael-2009-02-20.pdf, werden Möglichkeiten zur Durchführung von E-Klausuren beschrieben. Ist eine Entscheidung getroffen, ob Arbeitsrechner, Thin Clients oder gar Tablet-PCs In den E-Klausur PC-Pools eingesetzt werden sollen, ist zu gewährleisten, dass die Betriebssysteme größtmögliche Betrugssicherheit zeigen. Zum einen gibt es verschiedene Lösungen, die ein Betriebssystem in einen sogenannten Kiosk-Modus versetzen, der lediglich die Nutzung der E-Klausur Client-Anwendung erlaubt. Zum anderen lässt sich der Rechner durch die Erstellung eines speziellen reduzierten Nutzerprofils dahingehend absichern, dass der Aufruf von Systembefehlen, wie beispielsweise das Herunterfahren des Rechners oder das Starten anderer Programme, unterbunden wird.

### Der Erfindung zugrundeliegende Aufgabe

Es ist Aufgabe der Erfindung, die Durchführung von computergestützten Prüfungen auf einem Prüfungsrechner zu vereinfachen. Insbesondere ist es Aufgabe der Erfindung, den administrativen Aufwand beim Vorbereiten einer computergestützten Prüfung zu verringern.

### Erfindungsgemäße Lösung

Die Lösung der gestellten Aufgabe gelingt durch Bereitstellen eines Computersystems, welches einen Server und mindestens einen Prüfungsrechner aufweist, wobei der mindestens eine Prüfungsrechner über mindestens eine Datenverbindung mit dem Server verbindbar ist. Auf dem Server ist ein unveränderliches Benutzerprofil gespeichert, wobei das unveränderliche Benutzerprofil einen Prüfungsdesktop in Form einer ausführbaren Datei umfasst sowie eine Konfigurationsdatenstruktur umfasst, in der der Prüfungsdesktop als zu verwendende Desktopumgebung spezifiziert ist. Auf zumindest einem der Prüfungsrechner ist ein Prüfungskonto angelegt, das einer durchzuführenden Prüfung zugeordnet ist, wobei das Prüfungskonto mit dem unveränderlichen Benutzerprofil verknüpft ist. Das Prüfungskonto oder eine damit assoziierte Datenstruktur oder zumindest einer der Prüfungsrechner ist so konfiguriert, dass beim Anmelden oder nach dem Anmelden über das Prüfungskonto das unveränderliche Benutzerprofil von dem Server heruntergeladen und eine Kopie des Benutzerprofils auf dem jeweiligen Prüfungsrechner oder einem damit verbundenen Speichermedium gespeichert wird, wobei beim Anmelden oder nach dem Anmelden über das Prüfungskonto der Prüfungsdesktop zusammen mit dem Benutzerprofil von dem Server herunterladbar ist. Die Konfigurationsdatenstruktur ist dazu ausgelegt, dass beim Anmelden oder nach dem Anmelden über das Prüfungskonto der Prüfungsdesktop auf dem jeweiligen Prüfungsrechner gestartet wird. Der Prüfungsdesktop ist so ausgebildet, dass die durch den Prüfungsdesktop startbaren Programme auf eine konfigurierbare Menge von erlaubten Programmen eingeschränkt sind.

Dabei ist ein Prüfungskonto ein spezielles Benutzerkonto, das nicht an eine Person, sondern an eine bestimmte Prüfung beziehungsweise an eine Gruppe von Prüfungen und optional an einen bestimmten Prüfungsrechner gebunden ist. Das Prüfungskonto ist mit einem unveränderlichen Benutzerprofil verknüpft, das auf dem Prüfungsserver gespeichert ist. Durch das unveränderliche Benutzerprofil werden beispielsweise die Konfiguration des Prüfungsrechners, die Zugriffsreche der Prüfungsteilnehmerinnen, etc. festgelegt. Beim Anmelden oder nach dem Anmelden über das Prüfungskonto wird das unveränderliche Benutzerprofil vom Server zum jeweiligen Prüfungsrechner heruntergeladen, wobei eine Kopie des Benutzerprofils auf dem Prüfungsrechner oder einem damit verbundenen Speichermedium gespeichert wird. Durch das erfindungsgemäße Zusammenwirken der prüfungsspezifisch aufgesetzten Prüfungskonten mit dem unveränderlichen Benutzerprofil wird der Administrationsaufwand beim Vorbereiten einer computergestützten Prüfung verringert. Zum Vorbereiten einer computergestützten Prüfung, die von mindestens einer Teilnehmerln an mindestens einem Prüfungsrechner durchgeführt wird, ist es lediglich erforderlich, auf zumindest einem der Prüfungsrechner ein Prüfungskonto anzulegen, was auch automatisiert erfolgen kann. Das unveränderliche Benutzerprofil wird auf dem Server für die jeweiligen an einer Prüfung beteiligten Prüfungsrechner nur einmal zur Verfügung gestellt und wird dann heruntergeladen. Dadurch ist gewährleistet, dass alle Prüfungsteilnehmerinnen dieselben Zugriffsrechte und dieselbe Konfiguration des Prüfungsrechners zur Verfügung gestellt bekommen. Außerdem wird der Vorbereitungsaufwand verringert, weil das unveränderliche Benutzerprofil nur einmal für die ganze Prüfung oder sogar für mehrere Prüfungen erstellt werden muss. Um eine Ausführung der Prüfung in einer geeigneten Desktopumgebung zu ermöglichen, wird in der Konfigurationsdatenstruktur des unveränderlichen Benutzerprofils ein Prüfungsdesktop als zu verwendende Desktopumgebung spezifiziert. Die vom Prüfungsdesktop startbaren Programme sind auf eine konfigurierbare Menge von erlaubten Programmen eingeschränkt. Dadurch wird erreicht, dass die Prüfungsteilnehmerinnen während der Prüfung nur die für die Prüfung zugelassenen Programme verwenden können.

Ein erfindungsgemäßes Verfahren dient zum Bereitstellen einer vordefinierten Desktopumgebung auf mindestens einem Prüfungsrechner in einem Computersystem, welches den mindestens einen Prüfungsrechner sowie einen Server umfasst, wobei der mindestens eine Prüfungsrechner über mindestens eine Datenverbindung mit dem Server verbindbar ist. Auf dem Server ist ein unveränderliches Benutzerprofil gespeichert, wobei das unveränderliche Benutzerprofil einen Prüfungsdesktop in Form einer ausführbaren Datei umfasst sowie eine Konfigurationsdatenstruktur umfasst, in der der Prüfungsdesktop als zu verwendende Desktopumgebung spezifiziert ist. Auf zumindest einem der Prüfungsrechner ist ein Prüfungskonto angelegt, das einer durchzuführenden Prüfung zugeordnet ist, wobei das Prüfungskonto mit dem unveränderlichen Benutzerprofil verknüpft ist. Das Verfahren umfasst das Anmelden über das jeweilige Prüfungskonto an zumindest einem der Prüfungsrechner, wobei beim Anmelden oder nach dem Anmelden über das Prüfungskonto das unveränderliche Benutzerprofil von dem Server heruntergeladen und eine Kopie des Benutzerprofils auf dem jeweiligen Prüfungsrechner oder einem damit verbundenen Speichermedium gespeichert wird, wobei beim Anmelden oder nach dem Anmelden über das Prüfungskonto der Prüfungsdesktop zusammen mit dem Benutzerprofil von dem Server heruntergeladen wird. Darüber hinaus umfasst das Verfahren das Starten des Prüfungsdesktops auf dem jeweiligen Prüfungsrechner beim Anmelden oder nach dem Anmelden über das Prüfungskonto, wobei der Prüfungsdesktop so ausgebildet ist, dass die durch den Prüfungsdesktop startbaren Programme auf eine konfigurierbare Menge von erlaubten Programmen eingeschränkt sind.

### Verfahren zum Vorbereiten der Prüfung

Ein erfindungsgemäßes Verfahren dient zum Vorbereiten einer computergestützten Prüfung in einem Computersystem. Das Computersystem weist einen Server und mindestens einen Prüfungsrechner auf, wobei der mindestens eine Prüfungsrechner über mindestens eine Datenverbindung mit dem Server verbindbar ist. Auf dem Server ist ein unveränderliches Benutzerprofil gespeichert. Das unveränderliche Benutzerprofil umfasst eine Konfigurationsdatenstruktur, in der ein Prüfungsdesktop als zu verwendende Desktopumgebung spezifiziert ist. Das Verfahren umfasst das Anlegen, auf zumindest einem der Prüfungsrechner, eines Prüfungskontos, das einer durchzuführenden Prüfung zugeordnet ist, und das Verknüpfen des Prüfungskontos mit dem unveränderlichen Benutzerprofil, das auf dem Server gespeichert ist. Das Verfahren umfasst das Initiieren, vom Server aus per Fernzugriff an zumindest einem der Prüfungsrechner, einer Anmeldung über das jeweilige Prüfungskonto. Darüber hinaus umfasst das Verfahren beim Anmelden oder nach dem Anmelden über das jeweilige Prüfungskonto das Herunterladen eines unveränderlichen Benutzerprofils vom Server zum jeweiligen Prüfungsrechner und das Speichern einer Kopie des Benutzerprofils auf dem jeweiligen Prüfungsrechner oder einem damit verbundenen Speichermedium.

Das Prüfungskonto ist ein spezielles Benutzerkonto, das an eine bestimmte Prüfung beziehungsweise an eine Gruppe von Prüfungen und optional an einen bestimmten Prüfungsrechner gebunden ist. Durch die Einführung derartiger Prüfungskonten, die mit einem auf einem Server vorgesehenen unveränderlichen Benutzerprofil verknüpft werden, wird die Vorbereitung der Prüfung vereinfacht. Zum Vorbereiten der Prüfung wird für zumindest einen der Prüfungsrechner ein Prüfungskonto angelegt, und dieses Prüfungskonto wird mit dem unveränderlichen Benutzerprofil auf dem Server verknüpft. Das unveränderliche Benutzerprofil, das die Zugriffsrechte der Prüfungsteilnehmerinnen und die Konfiguration der Prüfungsrechner festlegt, muss für die jeweiligen Prüfungsrechner nur einmal auf dem Server erzeugt werden. Anschließend wird vom Server aus per Fernzugriff an zumindest einem der Prüfungsrechner eine Anmeldung über das jeweilige Prüfungskonto initiiert. Beim Anmelden oder nach dem Anmelden wird das unveränderliche Benutzerprofil vom Server zu den verschiedenen Prüfungsrechnern heruntergeladen, wobei eine Kopie des Benutzerprofils auf dem jeweiligen Prüfungsrechner oder einem damit verbundenen Speichermedium gespeichert wird. Durch dieses Zusammenwirken zwischen den Prüfungskonten und dem unveränderlichen Benutzerprofil wird der administrative Aufwand beim Vorbereiten einer Prüfung verringert. Insbesondere kann das im Vorfeld der Prüfung erforderliche Erstellen der Prüfungskonten sowie das Anmelden über die Prüfungskonten beispielsweise vom Server aus automatisiert durchgeführt werden, was den Aufwand weiter verringert. Insgesamt wird ein praxistaugliches Verfahren zur Verfügung gestellt, welches das Durchführen von computergestützten Prüfungen vereinfacht.

Die Lösung der gestellten Aufgabe gelingt außerdem durch Bereitstellen eines Computersystems, welches einen Server und mindestens einen Prüfungsrechner aufweist, wobei der mindestens eine Prüfungsrechner über mindestens eine Datenverbindung mit dem Server verbindbar ist. Auf dem Server ist ein unveränderliches Benutzerprofil gespeichert, welches eine Konfigurationsdatenstruktur umfasst, in der ein Prüfungsdesktop als zu verwendende Desktopumgebung spezifiziert ist. Auf zumindest einem der Prüfungsrechner ist ein Prüfungskonto angelegt, das einer durchzuführenden Prüfung zugeordnet ist, wobei das Prüfungskonto mit dem unveränderlichen Benutzerprofil verknüpft ist. Der Server ist dazu ausgelegt, per Fernzugriff an zumindest einem der Prüfungsrechner eine Anmeldung über das jeweilige Prüfungskonto zu initiieren. Das Prüfungskonto oder eine damit assoziierte Datenstruktur oder zumindest einer der Prüfungsrechner ist so konfiguriert, dass beim Anmelden oder nach dem Anmelden über das Prüfungskonto das unveränderliche Benutzerprofil von dem Server heruntergeladen und eine Kopie des Benutzerprofils auf dem jeweiligen Prüfungsrechner oder einem damit verbundenen Speichermedium gespeichert wird.

### Bevorzugte Ausgestaltungen der Erfindung

Vorzugsweise ist das Prüfungskonto der durchzuführenden Prüfung und dem jeweiligen Prüfungsrechner zugeordnet.

Vorzugsweise ist das Prüfungskonto oder eine damit assoziierte Datenstruktur oder zumindest einer der Prüfungsrechner so konfiguriert, dass Änderungen, die an der Kopie des Benutzerprofils auf einem jeweiligen Prüfungsrechner vorgenommen werden, nicht zum Server zurückkopiert werden. Vorzugsweise ist über das unveränderliche Benutzerprofil mindestens eines von Folgenden festlegbar: eine Konfiguration des Prüfungskontos, Benutzerrechte des Prüfungskontos, mindestens eine Einstellung des Prüfungskontos.

Vorzugsweise handelt es sich bei der mindestens einen Datenverbindung um mindestens eine verschlüsselte Verbindung.

### Prüfungsdesktop

Vorzugsweise stellt der Prüfungsdesktop eine abgesicherte Desktopumgebung zur Durchführung der Prüfung bereit. Vorzugsweise handelt es sich bei dem Prüfungsdesktop um einen Ersatzdesktop für eine reguläre Desktopumgebung des jeweiligen Prüfungsrechners. Vorzugsweise weist der Prüfungsdesktop im Vergleich zu einer regulären Desktopumgebung einen reduzierten Funktionsumfang auf.

Vorzugsweise weist der Prüfungsdesktop kein Startmenü auf. Gemäß einer alternativ bevorzugten Ausführungsform weist der Prüfungsdesktop ein Startmenü auf, wobei das über das Startmenü aufrufbare mindestens eine Programm auf die konfigurierbare Menge von erlaubten Programmen beschränkt ist.

Vorzugsweise ist der Prüfungsdesktop ausgelegt für mindestens eines von folgenden: eine Ausführung von Programmen zu unterbinden, die nicht zur konfigurierbaren Menge von erlaubten Programmen gehören, einen Internetzugang zu blockieren oder den Internetzugang auf bestimmte vordefinierte Seiten einzuschränken, Netzwerkverbindungen auf eine oder mehrere vorher festgelegte Netzwerkverbindungen zu beschränken, Netzwerkverbindungen auf eine verschlüsselte Netzwerkverbindung zum Server zu beschränken.

Vorzugsweise umfasst die konfigurierbare Menge von erlaubten Programmen Drittanbietersoftware. Vorzugsweise umfasst die konfigurierbare Menge von erlaubten Programmen mindestens eines von folgenden: ein Programm für Konstruktionsaufgaben, ein CAD-Programm für Konstruktionsaufgaben, ein Programmiertool, eine integrierte Entwicklungsumgebung für Programmieraufgaben, eine Entwicklungssoftware für elektronische Schaltungen, eine Simulationssoftware für elektronische Schaltungen, eine Modellierungssoftware für regelungstechnische Aufgaben, eine Simulationssoftware für regelungstechnische Aufgaben, eine Planungssoftware für Produktionsabläufe, eine Simulationssoftware für Produktionsabläufe, eine Verwaltungssoftware für betriebliche Prozesse.

### Anmeldung

Vorzugsweise ist das Computersystem dazu ausgelegt, dass das Anmelden über das Prüfungskonto an zumindest einem der Prüfungsrechner durch mindestens einen Befehl initiiert wird, der vom Server zu dem zumindest einen der Prüfungsrechner übertragen wird. Vorzugsweise ist das Computersystem dazu ausgelegt, dass das Anmelden über das Prüfungskonto an zumindest einem der Prüfungsrechner durch einen vom Server veranlassten Neustart des zumindest einen der Prüfungsrechner initiiert wird.

Vorzugsweise ist das Prüfungskonto oder eine damit assoziierte Datenstruktur oder zumindest einer der Prüfungsrechner so konfiguriert, dass beim Anmelden oder nach dem Anmelden über das Prüfungskonto mindestens ein für die Prüfung benötigtes Programm automatisch gestartet wird.

### Abmeldung

Vorzugsweise ist das Prüfungskonto oder eine damit assoziierte Datenstruktur oder zumindest einer der Prüfungsrechner so konfiguriert, dass beim Abmelden oder nach dem Abmelden über das Prüfungskonto die Kopie des Benutzerprofils auf dem jeweiligen Prüfungsrechner oder einem damit verbundenen Speichermedium gelöscht wird. Vorzugsweise ist das Prüfungskonto oder eine damit assoziierte Datenstruktur oder zumindest einer der Prüfungsrechner so konfiguriert, dass beim Abmelden oder nach dem Abmelden über das Prüfungskonto die Kopie des Benutzerprofils einschließlich sämtlicher Daten und Dateien, die innerhalb der Kopie des Benutzerprofils abgespeichert sind, auf dem jeweiligen Prüfungsrechner oder einem damit verbundenen Speichermedium gelöscht wird.

### Wächtereinrichtung

Vorzugsweise umfasst zumindest einer der Prüfungsrechner oder das unveränderliche Benutzerprofil eine Wächtereinrichtung, die dazu ausgelegt ist, während einer Prüfung mindestens eines von Systemzustand des Prüfungsrechners, Systemauslastung des Prüfungsrechners, gestartete Programme und Zustand von Netzwerkverbindungen des Prüfungsrechners zu überwachen.

Vorzugsweise ist die Wächtereinrichtung dazu ausgelegt, Abweichungen zu einem vorab definierten zu erwartenden Systemverhalten zu erfassen.

Vorzugsweise umfasst zumindest einer der Prüfungsrechner oder das unveränderliche Benutzerprofil eine Wächtereinrichtung, die dazu ausgelegt ist, während einer Prüfung mindestens eines von folgenden zu überwachen: welche Software während der Prüfung auf dem Prüfungsrechner ausgeführt wird, welche Systemauslastung der Prüfungsrechner aufweist, welche Netzwerkverbindungen aktiv sind, wie hoch die Auslastung der Netzwerkverbindungen ist, Systemzustand des Prüfungsrechners, Systemauslastung des Prüfungsrechners, gestartete Programme, Zustand von Netzwerkverbindungen des Prüfungsrechners.

Vorzugsweise ist die Wächtereinrichtung Teil des Prüfungsdesktops.

Vorzugsweise umfasst das unveränderliche Benutzerprofil die Wächtereinrichtung in Form einer ausführbaren Datei, wobei beim Anmelden oder nach dem Anmelden über das Prüfungskonto die Wächtereinrichtung zusammen mit dem Benutzerprofil von dem Server herunterladbar ist und eine Kopie des Benutzerprofils auf dem jeweiligen Prüfungsrechner oder einem damit verbundenen Speichermedium speicherbar ist.

### Versionsverwaltungseinrichtung

Vorzugsweise ist auf zumindest einem der Prüfungsrechner oder im unveränderlichen Benutzerprofil eine Versionsverwaltungseinrichtung vorgesehen, die dazu ausgelegt ist, gemäß eines zeitlichen Schemas mindestens einen von folgenden Speicherprozessen durchzuführen: mindestens eine Kopie von mindestens einer auf dem jeweiligen Prüfungsrechner bearbeiteten Prüfungsdatei auf dem jeweiligen Prüfungsrechner oder einem damit verbundenen Speichermedium zu speichern, mindestens eine auf dem jeweiligen Prüfungsrechner bearbeitete Prüfungsdatei zum Server zu übertragen.

Vorzugsweise ist die Versionsverwaltungseinrichtung dazu ausgelegt, gemäß des zeitlichen Schemas mindestens eine Kopie von mindestens einer auf dem jeweiligen Prüfungsrechner bearbeiteten Prüfungsdatei auf dem jeweiligen Prüfungsrechner oder einem damit verbundenen Speichermedium zu speichern und die mindestens eine Kopie der mindestens einen Prüfungsdatei im Hintergrund zum Server zu übertragen. Vorzugsweise ist der jeweilige Prüfungsrechner dazu ausgelegt, die mindestens eine Kopie der mindestens einen Prüfungsdatei, die auf dem jeweiligen Prüfungsrechner oder einem damit verbundenen Speichermedium gespeichert ist, im Hintergrund zum Server zu übertragen.

### Das Verfahren zum Vorbereiten einer computergestützten Prüfung

Vorzugsweise ist der Prüfungsdesktop so ausgebildet, dass die durch den Prüfungsdesktop startbaren Programme auf eine konfigurierbare Menge von erlaubten Programmen eingeschränkt sind.

### Anmeldung

Vorzugsweise weist das Verfahren folgenden zusätzlichen Schritt auf: Übermitteln mindestens eines Befehls vom Server an zumindest einen der Prüfungsrechner, wobei mittels des mindestens einen Befehls an dem jeweiligen Prüfungsrechner eine Anmeldung über das jeweilige Prüfungskonto initiiert wird. Vorzugsweise weist das Verfahren folgenden zusätzlichen Schritt auf: Initiieren eines Neustarts von zumindest einem der Prüfungsrechner durch den Server, wobei beim Neustart an dem jeweiligen Prüfungsrechner eine automatische Anmeldung über das Prüfungskonto erfolgt.

Vorzugsweise weist das Verfahren folgende zusätzlichen Schritte auf: Übermitteln eines Befehls vom Server zu zumindest einem der Prüfungsrechner, wobei durch den Befehl auf dem zumindest einen der Prüfungsrechner das jeweilige Prüfungskonto als bei einem Neustart des Prüfungsrechners automatisch anzumeldendes Konto festgelegt wird, Initiieren eines Neustarts von dem zumindest einen der Prüfungsrechner durch den Server, wobei beim Neustart an einem jeweiligen Prüfungsrechner eine automatische Anmeldung über das Prüfungskonto erfolgt. Vorzugsweise wird durch den Befehl auf dem jeweiligen Prüfungsrechner das Prüfungskonto nur für den nächstfolgenden Neustart des Prüfungsrechners als automatisch anzumeldendes Konto festgelegt.

### Übertragung des Prüfungsdesktops im Benutzerprofil

Vorzugsweise umfasst das unveränderliche Benutzerprofil den Prüfungsdesktop in Form einer ausführbaren Datei, wobei beim Anmelden oder nach dem Anmelden über das Prüfungskonto der Prüfungsdesktop zusammen mit dem Benutzerprofil von dem Server heruntergeladen und eine Kopie des Benutzerprofils auf dem jeweiligen Prüfungsrechner oder einem damit verbundenen Speichermedium gespeichert wird.

Vorzugsweise wird beim Anmelden oder nach dem Anmelden über das Prüfungskonto der Prüfungsdesktop auf dem jeweiligen Prüfungsrechner gestartet.

Vorzugsweise wird beim Anmelden oder nach dem Anmelden am jeweiligen Prüfungsrechner über das Prüfungskonto mindestens ein für die Prüfung erlaubtes Programm automatisch auf dem jeweiligen Prüfungsrechner gestartet.

### Starten der Prüfung

Vorzugsweise umfasst das Verfahren einen Schritt des Startens der Prüfung auf zumindest einem der Prüfungsrechner. Vorzugsweise umfasst das Verfahren einen Schritt des Startens der Prüfung auf zumindest einem der Prüfungsrechner, wobei das Starten der Prüfung auf dem jeweiligen Prüfungsrechner das Eingeben eines Startcodes in eine Eingabemaske des jeweiligen Prüfungsrechners umfasst. Vorzugsweise umfasst das Verfahren einen Schritt des Startens der Prüfung auf zumindest einem der Prüfungsrechner, wobei das Starten der Prüfung das Übertragen eines Startbefehls vom Server zu dem zumindest einen der Prüfungsrechner umfasst. Vorzugsweise ist zumindest einer der Prüfungsrechner dazu ausgelegt, vor Empfang des Startbefehls Benutzereingaben nicht zu dem mindestens einen gestarteten Programm weiterzuleiten und ab Empfang des Startbefehls Benutzereingaben zu dem mindestens einen gestarteten Programm weiterzuleiten.

### Beenden der Prüfung

Vorzugsweise umfasst das Verfahren einen Schritt des Beendens der Prüfung auf zumindest einem der Prüfungsrechner. Vorzugsweise umfasst das Verfahren einen Schritt des Beendens der Prüfung auf zumindest einem der Prüfungsrechner, wobei das Beenden der Prüfung das Übertragen eines Beendigungsbefehls vom Server zu dem zumindest einen der Prüfungsrechner umfasst. Vorzugsweise ist der Prüfungsrechner dazu ausgelegt, ab Empfang des Beendigungsbefehls keine Benutzereingaben zu dem mindestens einen gestarteten Programm mehr weiterzuleiten.

### Abmeldung

Vorzugsweise wird beim Abmelden oder nach dem Abmelden über das Prüfungskonto die Kopie des Benutzerprofils auf dem jeweiligen Prüfungsrechner oder einem damit verbundenen Speichermedium gelöscht. Vorzugsweise wird beim Abmelden oder nach dem Abmelden über das Prüfungskonto die Kopie des Benutzerprofils einschließlich sämtlicher Daten und Dateien, die innerhalb der Kopie des Benutzerprofils abgespeichert sind, auf dem jeweiligen Prüfungsrechner oder einem damit verbundenen Speichermedium gelöscht.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1: zeigt ein Computersystem zur Durchführung einer computergestützten, digitalen Prüfung, das drei Prüfungsrechner, einen Prüfungsserver sowie einen Steuerrechner umfasst.
- Figur 2: zeigt die Datenstruktur eines Benutzerprofils.
- Figur 3: veranschaulicht das Zusammenwirken zwischen prüfungsspezifisch erstellten Prüfungskonten und unveränderlichen Benutzerprofilen bei der Durchführung von zwei aufeinanderfolgenden Prüfungen A und B.
- Figur 4: zeigt, wie ein Prüfungsdesktop als ausführbare Datei zusammen mit dem unveränderlichen Benutzerprofil vom Server zu dem jeweiligen Prüfungsrechner übertragen werden kann.
- Figur 5: zeigt, wie mittels einer Versionsverwaltungseinrichtung lokale Snapshots der Prüfungsdateien erzeugt und im Hintergrund zum Prüfungsserver übertragen werden.
- Figur 6: zeigt einen Prüfungsrechner mit einer Eingabemaske, wobei die Eingabemaske im Vordergrund angeordnet ist und den gesamten Bildschirm überdeckt.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

In Schulen, Hochschulen, Universitäten, Weiterbildungszentren usw. besteht zunehmend das Bedürfnis, Prüfungen computergestützt in digitaler Form durchzuführen. Hierzu wird eine geeignete, abgesicherte IT-Umgebung benötigt, um die Gefahren von Störungen so gering wie möglich zu halten und Manipulationsversuche zu verhindern.

Bei einer digitalen Prüfung in ihrer einfachsten Form werden Aufgaben und Fragen auf dem Bildschirm angezeigt und durch Eingaben mit Tastatur und Maus beantwortet. Darüber hinaus besteht jedoch das Bedürfnis, auf dem Rechner anwendungsorientierte Prüfungen durchzuführen, bei denen insbesondere zur Durchführung von Entwurfs- und Programmieraufgaben Programme von Drittanbietern in einer abgesicherten IT-Umgebung zur Bearbeitung vorgegebener Prüfungsaufgaben eingesetzt werden. Beispiele für derartige Software, die für eine anwendungsorientierte Prüfung genutzt werden kann, umfassen CAD-Programme für Konstruktionsaufgaben, Programmiertools und integrierte Entwicklungsumgebungen (IDEs) für Programmieraufgaben, Entwicklungs- und Simulationssoftware für elektronische Schaltungen, Modellierungs- und Simulationssoftware für regelungstechnische Aufgaben, Planungs- und Simulationssoftware für Produktionsabläufe, Verwaltungssoftware für betriebliche Prozesse, usw.

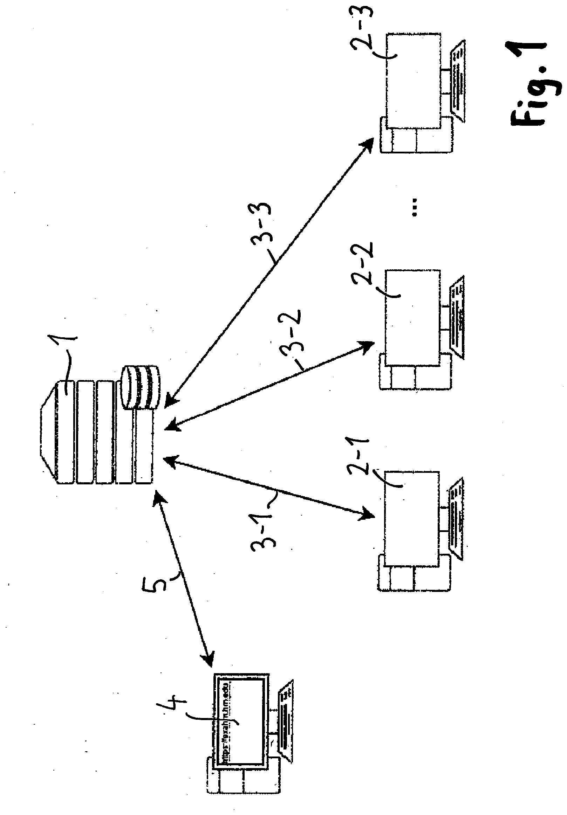

In Figur 1 ist ein Beispiel eines Computersystems gezeigt, mit dem digitale Prüfungen in einer abgesicherten IT-Umgebung durchgeführt werden können. Das in Figur 1 gezeigte Computersystem umfasst einen Prüfungsserver 1 und eine Mehrzahl von Prüfungsrechnern 2-1, 2-2, 2-3, die über Datenverbindungen 3-1, 3-2, 3-3 mit dem Prüfungsserver 1 verbunden sind. An den Prüfungsrechnern 2-1 bis 2-3 wird die Prüfung von den Prüfungsteilnehmerinnen abgelegt. Zusätzlich kann das Computersystem einen Steuerrechner 4 umfassen, der über eine Datenverbindung 5 mit dem Prüfungsserver 1 verbunden ist und dazu ausgelegt ist, eine Prüfung zu konfigurieren und durchzuführen.

Der Prüfungsserver 1 ist dazu ausgelegt, den Ablauf der Prüfung auf den angeschlossenen Prüfungsrechnern 2-1 bis 2-3 zu steuern. Hierzu kann der Prüfungsserver 1 die Prüfungsrechner 2-1 bis 2-3 beispielsweise mit Hilfe von Remote- oder Fernsteuer-Tools, wie Windows PowerShell, openSSH oder dem Windows Management Interface (WMI) steuern. Der Prüfungsserver 1 kann darüber hinaus dazu ausgelegt sein, die Prüfungsrechner 2-1 bis 2-3 bei Bedarf ein- oder auszuschalten, beispielsweise unter Verwendung von Wake-on-LAN. Auf den Prüfungsrechnern 2-1 bis 2-3 werden Prüfungskonten, also spezielle Benutzerkonten für eine bestimmte Prüfung angelegt, welche dann für die Durchführung der Prüfung genutzt werden. Mit den Prüfungskonten ist ein unveränderliches Benutzerprofil verknüpft, das auf dem Prüfungsserver 1 gespeichert ist. Der Prüfungsserver 1 speichert sämtliche für die Prüfung notwendigen Dateien. Insbesondere werden die von den Teilnehmerinnen an den Prüfungsrechnern 2-1 bis 2-3 erstellten Prüfungsdateien zum Prüfungsserver 1 übertragen und dort archiviert. Alternativ dazu kann die Archivierung auch auf einem eigenen Server stattfinden, der in Figur 1 nicht dargestellt ist. Darüber hinaus stellt der Prüfungsserver 1 beispielsweise eine oder mehrere Webseiten beziehungsweise Browser-Apps bereit, über die eine Prüfung erstellt und konfiguriert werden kann. Auf diese Webseiten beziehungsweise Browser-Apps kann beispielsweise vom Steuerrechner 4 aus zugegriffen werden. Der Prüfungsserver 1 kann als einzelne Komponente implementiert sein, er kann aber auch in mehrere Server-Komponenten aufgeteilt werden.

Der Steuerrechner 4 dient dazu, eine Prüfung beispielsweise über eine vom Prüfungsserver 1 bereitgestellte Webseite beziehungsweise Browser-App zu konfigurieren und durchzuführen. Alternativ zu einer Webseite beziehungsweise Browser-App kann auch ein eigenständiges Programm zum Konfigurieren der Prüfung verwendet werden. Bei dem Steuerrechner 4 kann es sich beispielsweise um einen Steuer-PC handeln, es kann aber auch ein Tablet-PC, ein Smartphone etc. als Steuerrechner 4 verwendet werden. Bei dem Prüfungsserver 1 und dem Steuerrechner 4 kann es sich um zwei separate Geräte handeln, der Prüfungsserver 1 und der Steuerrechner 4 können aber auch in einem einzigen Gerät vereint werden.

An den Prüfungsrechnern 2-1 bis 2-3 legen die Teilnehmerinnen eine Prüfung ab. Dabei können zum Ablegen der Prüfung benötigte Programme, wie beispielsweise Entwurfswerkzeuge oder Programmierumgebungen während der Prüfung auf den Prüfungsrechnern 2-1 bis 2-3 ausgeführt werden. Die Prüfungsrechner 2-1 bis 2-3 werden dabei vorzugsweise vom Prüfungsserver 1 ferngesteuert. Beispielsweise können der Beginn und das Ende der Prüfung durch geeignete Befehle gesteuert werden, die vom Prüfungsserver 1 über die Datenverbindungen 3-1 bis 3-3 zu den angeschlossenen Prüfungsrechnern 2-1 bis 2-3 übermittelt werden. Als Prüfungsrechner 2-1 bis 2-3 werden vorzugweise Prüfungs-PCs verwendet, es können alternativ dazu aber auch Tablet-PCs, Smartphones, eingebettete Systeme oder andere Computer als Prüfungsrechner verwendet werden.

Die Datenverbindungen zwischen dem Prüfungsserver 1 und den Prüfungsrechnern 2-1 bis 2-3 sowie zum Steuerrechner 4 können beispielsweise als Netzwerkverbindungen oder als drahtlose Kommunikationsverbindungen realisiert sein, vorzugweise als verschlüsselte Verbindungen. Beispielsweise können zwischen dem Prüfungsserver 1 und den angeschlossenen Prüfungsrechnern 2-1 bis 2-3, aber auch zwischen dem Prüfungsserver 1 und dem Steuerrechner 4 jeweils VPN-Verbindungen vorgesehen sein, um eine von äußeren Störungen und Einflussnahmen unabhängige sichere Datenübermittlung zu ermöglichen. Dabei kann die tatsächlich vorhandene Netzwerkstruktur auch anders und vielfältiger als die in Figur 1 gezeigten Kommunikationswege sein. Es ist beispielsweise möglich, die tatsächlich vorhandene Netzwerkstruktur durch Konfigurationseinstellungen, wie beispielsweise Routing-Einstellungen, oder durch andere Maßnahmen, wie beispielsweise VPN-Verbindungen, so zu beeinflussen, dass während einer Prüfung nur die abgebildeten Kommunikationswege genutzt werden können.

In der Praxis werden die verschiedenen Komponenten des Computersystems meist individuelle Computer sein. Es ist jedoch auch möglich, eine oder mehrere Komponenten in einem Virtualisierungssystem abzubilden.

### Das Prüfungskonto als spezielles Benutzerkonto

Ein Benutzerkonto ist eine Zugangsberechtigung, ein IT-System oder einen Computer zu nutzen. Üblicherweise beinhaltet ein Benutzerkonto den Namen der zugeordneten Person sowie ein zugehöriges Passwort oder eine biometrische Information (charakteristische Daten des Fingerabdrucks, der Augeniris, des Gesichts und/oder der Stimme), durch die der Zugang zum IT-System ermöglicht wird. Im vorliegenden Fall sind die Benutzerkonten jedoch nicht wie sonst üblich an eine Person gebunden, sondern an eine bestimmte Prüfung oder eine Gruppe von Prüfungen. Ein derartiges Benutzerkonto wird im Folgenden als Prüfungskonto bezeichnet. Ein Prüfungskonto ist also ein spezielles Benutzerkonto, das nicht an eine Person, sondern an eine bestimmte Prüfung beziehungsweise an eine Gruppe von Prüfungen und optional an einen bestimmten Prüfungsrechner gebunden ist. Bei der Vorbereitung einer Prüfung wird an jedem Prüfungsrechner 2-1 bis 2-3 ein Prüfungskonto für die jeweilige Prüfung angelegt, über das die Anmeldungen an den jeweiligen Prüfungsrechnern 2-1 bis 2-3 vorgenommen werden. Um den Administrationsaufwand bei der Vorbereitung einer Prüfung zu verringern, können die Prüfungskonten auf den Prüfungsrechnern 2-1 bis 2-3 vorzugsweise vom Prüfungsserver 1 aus mittels Fernzugriff erstellt und später wieder entfernt werden.

Es ist von Vorteil, ein Prüfungskonto nicht nur an eine bestimmte Prüfung, sondern darüber hinaus auch an einen bestimmten Prüfungsrechner zu binden. Dadurch können Mehrfachanmeldungen an verschiedenen Prüfungsrechnern mit einem einzigen Prüfungskonto verhindert werden. Dies ist deshalb vorteilhaft, weil es ansonsten prinzipiell möglich wäre, von einem Prüfungsrechner aus auf die Dateien eines anderen Prüfungsrechners zuzugreifen.

Die Anmeldung über die Prüfungskonten an den einzelnen Prüfungsrechnern 2-1 bis 2-3 kann manuell durchgeführt werden. Von Vorteil ist jedoch, die Anmeldung über die Prüfungskonten zentral vom Prüfungsserver 1 aus zu veranlassen. Dabei kann der Prüfungsserver 1 die Anmeldung über die Prüfungskonten beispielsweise durch Fernzugriffsbefehle auf die Prüfungsrechner 2-1 bis 2-3 veranlassen. Alternativ dazu kann die Anmeldung über die Prüfungskonten beispielsweise über einen vom Prüfungsserver 1 ausgelösten Neustart der Prüfungsrechner 2-1 bis 2-3 durchgeführt werden.

Im Folgenden soll das Erstellen der Prüfungskonten anhand eines Beispiels veranschaulicht werden. Wenn beispielsweise eine computergestützte Prüfung in einem Raum mit 30 Computern durchgeführt werden soll, so werden hierzu insgesamt 30 Prüfungskonten angelegt. Falls an einer Prüfung beispielsweise 60 Personen teilnehmen und die Prüfung in zwei Gruppen durchgeführt wird, können hierzu entweder 60 Prüfungskonten, also zwei Prüfungskonten pro Prüfungsrechner, angelegt werden. Alternativ dazu ist es möglich, nur 30 Prüfungskonten anzulegen, also ein Prüfungskonto pro Prüfungsrechner, welche dann sowohl für die erste als auch für die zweite Gruppe verwendet werden.

### Das unveränderliche Benutzerprofil

Zur Konfiguration eines Benutzerkontos ist das Benutzerkonto mit einem Benutzerprofil verknüpft. In einem Benutzerprofil werden die individuellen Berechtigungen, Konfigurationseinstellungen und Dateien, die zu einem Benutzerkonto gehören, gespeichert. Dieses Konzept wird auch auf die oben beschriebenen Prüfungskonten angewendet, die einer bestimmten Prüfung zugeordnet sind. Hierzu werden alle Prüfungskonten einer Prüfung beziehungsweise einer Gruppe von Prüfungen mit einem einzigen unveränderlichen Benutzerprofil verknüpft. Dadurch wird der Konfigurationsaufwand für die Vielzahl von Prüfungskonten minimiert. In dem unveränderlichen Benutzerprofil werden die individuellen Zugriffsrechte, Konfigurationseinstellungen und Dateien, die zu einem Prüfungskonto gehören, festgelegt. Beispielsweise kann in dem unveränderlichen Benutzerprofil festgelegt werden, welche Programme während einer Prüfung aufgerufen werden dürfen.

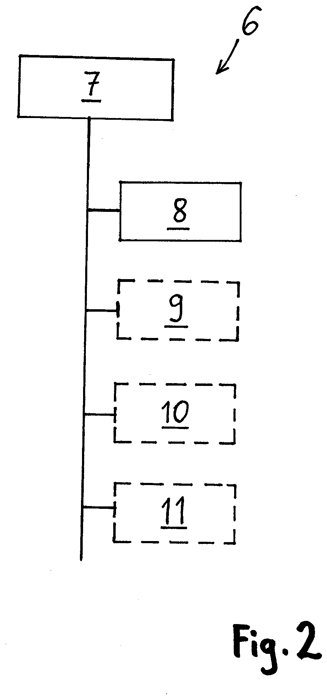

In Figur 2 ist die Datenstruktur eines Benutzerprofils 6 gezeigt. Bei dem Benutzerprofil 6 handelt es sich um ein Verzeichnis, das in Figur 2 in Form eines Verzeichnisbaums graphisch dargestellt ist. Das Benutzerprofil 6 ist mit der Bezeichnung 7 versehen und enthält eine Anzahl von unterschiedlichen Dateien.

Das Benutzerprofil 6 umfasst eine Konfigurationsdatenstruktur 8, in der für das Benutzerprofil 6 die individuellen Berechtigungen und Konfigurationseinstellungen festgelegt werden. Beispiele für die Konfigurationsdatenstruktur 8 sind die Dateien NTuser.dat und NTuser.man. In der Konfigurationsdatenstruktur 8 ist beispielsweise festgelegt, dass als Desktopumgebung auf dem Prüfungsrechner der hierfür vorgesehene Prüfungsdesktop gestartet werden soll. Durch den Prüfungsdesktop wird auf den Prüfungsrechnern eine abgesicherte Desktopumgebung zur Verfügung gestellt, in der eine vorgegebene Menge von für die Prüfung zugelassenen Programmen ausgeführt werden darf.

Gemäß einer vorteilhaften Ausführungsform kann der Prüfungsdesktop 9 innerhalb des Benutzerprofils 6 als ausführbare Datei mit abgespeichert sein. Diese ausführbare Datei ist in Figur 2 gestrichelt eingezeichnet. Wenn das gesamte Benutzerprofil 6 vom Prüfungsserver 1 zu den angeschlossenen Prüfungsrechnern 2-1 bis 2-3 übertragen wird, dann wird innerhalb des Benutzerprofils 6 auch der Prüfungsdesktop 9 mit zu den Prüfungsrechnern übertragen. Auf Seiten der Prüfungsrechner kann der in der lokalen Kopie des Benutzerprofils 6 enthaltene Prüfungsdesktop 9 dann gestartet werden.

Darüber hinaus können im Benutzerprofil 6 optional Prüfungsdateien 10 abgelegt sein. Bei diesen Prüfungsdateien 10 kann es sich beispielsweise um Konstruktionsdateien für ein CAD-Programm oder um eine vorgegebene Schaltung für ein Simulationsprogramm handeln, welches als Ausgangspunkt für eine anwendungsorientierte Aufgabenstellung dienen kann. Darüber hinaus kann das Benutzerprofil 6 eine Datei 11 mit Prüfungsaufgaben umfassen, in der die von den Prüfungsteilnehmerinnen zu bearbeitenden Aufgaben beschrieben sind.

Das unveränderliche Benutzerprofil zu einer bestimmten Prüfung ist zunächst nur auf dem Prüfungsserver 1 gespeichert. Bei der Anmeldung oder nach der Anmeldung über ein Prüfungskonto an einem Prüfungsrechner 2-1 bis 2-3 wird das unveränderliche Benutzerprofil von dem Prüfungsserver 1 zu dem jeweiligen Prüfungsrechner übertragen und auf dem jeweiligen Prüfungsrechner lokal gespeichert. Beispielsweise wird eine Kopie des unveränderlichen Benutzerprofils auf der Festplatte oder einem anderen lokalen Speichermedium des Prüfungsrechners gespeichert und kann dann auf dem jeweiligen Prüfungsrechner verwendet werden. Damit stehen auch sämtliche im Benutzerprofil 6 enthaltenen Dateien auf dem jeweiligen Prüfungsrechner lokal zur Verfügung und können auf dem jeweiligen Prüfungsrechner aufgerufen und verwendet werden. Bei der Abmeldung über das Prüfungskonto ist vorgesehen, dass die Daten des lokalen Benutzerprofils gelöscht werden. Die lokal gespeicherten Daten des Benutzerprofils, welche unter Umständen vom Benutzer verändert wurden, werden nicht zum Prüfungsserver zurückkopiert. Dabei werden nicht nur veränderte Einstellungen verworfen, sondern auch alle im Benutzerprofil enthaltenen Dateien. Dies ist für den Einsatz in einem Prüfungssystem sehr wichtig. Die auf dem Prüfungsserver 1 gespeicherten unveränderlichen Benutzerprofile bleiben stets unverändert erhalten, unabhängig davon, wie oft und auf welchen Computern sie eingesetzt wurden. Da die Originaldaten des unveränderlichen Benutzerprofils vor Veränderungen geschützt sind, wird verhindert, dass durch eine Prüfungsteilnehmerln Dateien oder veränderte Konfigurationseinstellungen zu dem Prüfungsserver 1, auf dem das unveränderliche Benutzerprofil gespeichert ist, zurückkopiert werden und von dort an andere Teilnehmerinnen innerhalb einer bestimmten Prüfung oder einer später nachfolgenden Prüfung weitergegeben werden. Stattdessen werden die Dateien und Einstellungen der lokalen Kopie des unveränderlichen Benutzerprofils am Ende einer Prüfung mit dem Abmelden der Prüfungskonten gelöscht oder in einem verschlüsselten und passwortgeschützten Bereich gespeichert und später gelöscht.

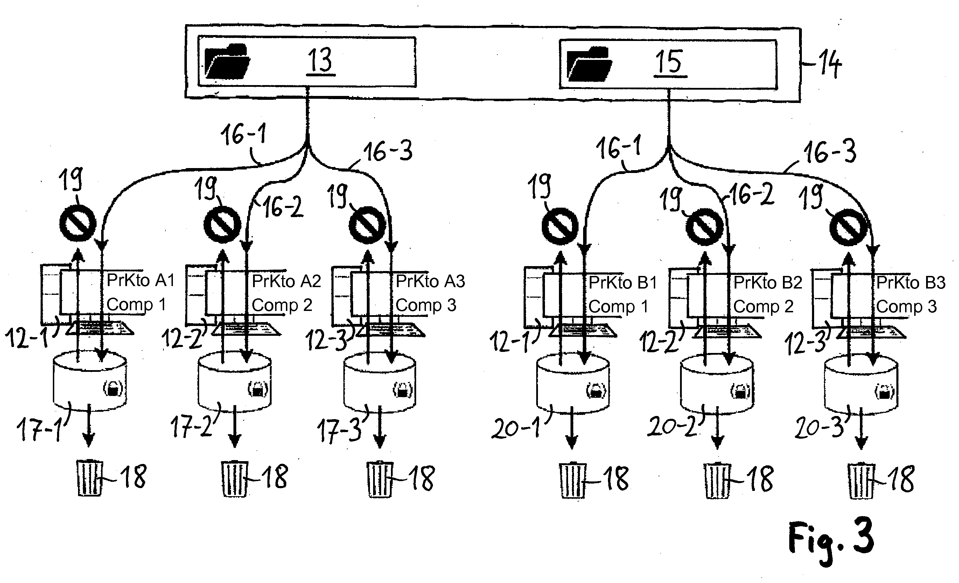

Anhand eines in Figur 3 gezeigten Beispiels soll im Folgenden das Zusammenwirken zwischen den Prüfungskonten und den unveränderlichen Benutzerprofilen näher erläutert werden. In dem gezeigten Beispiel werden auf den Computern 1 bis 3 eines Computerraums nacheinander zwei verschiedene Prüfungen A und B durchgeführt. Die Konfiguration der drei Prüfungsrechner 12-1, 12-2 und 12-3 während der Prüfung A wird dabei durch ein unveränderliche Benutzerprofil 13 vorgegeben, das auf dem Prüfungsserver 14 gespeichert ist. Zusätzlich ist auf dem Prüfungsserver 14 ein zweites unveränderliches Benutzerprofil 15 vorgesehen, das die Konfiguration der Prüfungsrechner für die Prüfung B spezifiziert.

Der Datenfluss bei der Durchführung der ersten Prüfung ist in der linken Hälfte von Figur 3 veranschaulicht. Zur Vorbereitung der Prüfung A werden auf den drei Prüfungsrechnern 12-1, 12-2, 12-3 vorab jeweils Prüfungskonten angelegt, die der Prüfung A und dem jeweiligen Prüfungsrechner zugeordnet sind. Auf dem ersten Prüfungsrechner 12-1 wird das Prüfungskonto A1 erstellt, auf dem Prüfungsrechner 12-2 das Prüfungskonto A2 und auf dem Prüfungsrechner 12-3 das Prüfungskonto A3. Vor der Durchführung der Prüfung wird über diese Prüfungskonten A1, A2 und A3 eine Anmeldung bei dem zugehörigen Prüfungsrechner 12-1, 12-2, 12-3 durchgeführt. Diese Anmeldung kann an den Prüfungsrechnern 12-1, 12-2, 12-3 manuell vorgenommen werden, diese Anmeldung über die Benutzerkonten A1, A2, A3 kann vorzugsweise aber auch vom Prüfungsserver 14 aus vorgenommen werden, beispielsweise durch das Übermitteln von entsprechenden Befehlen zu den Prüfungsrechnern oder durch Veranlassen eines Neustarts der Prüfungsrechner. Bei der Anmeldung oder nach der Anmeldung über die Prüfungskonten A1, A2, A3 wird das unveränderliche Benutzerprofil 13 vom Prüfungsserver 14 aus über die Datenverbindungen 16-1, 16-2, 16-3 zu den drei Prüfungsrechnern 12-1, 12-2, 12-3 übertragen und auf jedem Prüfungsrechner 12-1, 12-2, 12-3 wird eine lokale Kopie 17-1, 17-2, 17-3 des unveränderlichen Benutzerprofils 13 gespeichert. Durch diese lokale Kopie des unveränderlichen Benutzerprofils 13, die beispielsweise auf der Festplatte oder einem lokalen Datenträger des jeweiligen Prüfungsrechners 12-1 bis 12-3 gespeichert sein kann, wird die Konfiguration des Prüfungsrechners für die Durchführung der Prüfung A festgelegt. Im unveränderlichen Benutzerprofil 13 sind beispielsweise Zugriffsberechtigungen für den Prüfungsteilnehmer spezifiziert. Darüber hinaus können im unveränderlichen Benutzerprofil 13 die Programme angegeben sein, die der Prüfungsteilnehmer während der Prüfung auf dem jeweiligen Prüfungsrechner starten darf. Weiterhin ist es vorteilhaft, im unveränderlichen Benutzerprofil eine Konfigurationseinstellung vorzunehmen, durch die als Desktopumgebung der Prüfungsdesktop spezifiziert wird, der eine abgesicherte Umgebung für die Ausführung der verschiedenen Programme bereitstellt. Die Prüfung wird dann auf den drei Prüfungsrechnern 12-1, 12-2, 12-3 durchgeführt. Nach der Prüfung erfolgt eine Abmeldung über die Prüfungskonten A1, A2, A3, wobei diese Abmeldung entweder manuell erfolgen kann oder vom Prüfungsserver 14 initiiert wird. Bei der Abmeldung oder nach der Abmeldung können die vom Prüfling bearbeiteten Prüfungsdateien beispielsweise in einem abgesicherten Bereich gespeichert oder zum Prüfungsserver kopiert werden. Bei der Abmeldung oder nach der Abmeldung werden die lokalen Kopien 17-1, 17-2, 17-3 des unveränderlichen Benutzerprofils 13 gelöscht, wie dies in der linken Hälfte von Figur 3 durch die drei Mülltonnen 18 veranschaulicht ist. Auch sämtliche innerhalb der lokalen Kopien 17-1, 17-2, 17-3 des unveränderlichen Benutzerprofils 13 enthaltenen Dateien werden gelöscht, sodass sich die Prüfungsrechner 12-1, 12-2, 12-3 nach dem Abmelden wieder im ursprünglichen Zustand befinden. Ein Zurückkopieren der eventuell veränderten lokalen Kopien 17-1, 17-2, 17-3 des Benutzerprofils zum Prüfungsserver 14 ist nicht möglich, wie in Figur 3 durch die Symbole 19 veranschaulicht ist.

Die Prüfungsrechner 12-1 bis 12-3 befinden sich nun wieder im ursprünglichen Zustand, sodass zu einem späteren Zeitpunkt eine weitere Prüfung B durchgeführt werden kann, deren Ablauf in der rechten Hälfte von Figur 3 veranschaulicht ist. Zur Durchführung der Prüfung B wird auf dem ersten Rechner 12-1 ein Prüfungskonto B1, auf dem Prüfungsrechner 12-2 ein Prüfungskonto B2 und auf dem Prüfungsrechner 12-3 ein Prüfungskonto B3 angelegt, wobei jedes der Prüfungskonten B1, B2, B3 mit dem auf dem Prüfungsserver 14 gespeicherten unveränderlichen Benutzerprofil 15 verknüpft ist. Beim Anmelden oder nach dem Anmelden über die Prüfungskonten B1, B2, B3 wird das unveränderliche Benutzerprofil 15 vom Prüfungsserver 14 über die Datenverbindungen 16-1, 16-2, 16-3 zu den Prüfungsrechnern 12-1, 12-2, 12-3 heruntergeladen und als lokale Kopie 20-1, 20-2, 20-3 auf dem jeweiligen Prüfungsrechner 12-1, 12-2, 12-3 abgelegt. Beim Abmelden oder nach dem Abmelden über die Prüfungskonten B1, B2, B3 werden die lokalen Kopien 20-1, 20-2, 20-3 des unveränderlichen Benutzerprofils 15 gelöscht, wobei ein Zurückschreiben der eventuell veränderten lokalen Kopien zum Prüfungsserver 14 nicht möglich ist. Dadurch wird sichergestellt, dass die unveränderlichen Benutzerprofile 13 und 15 auf dem Prüfungsserver 14 unverändert erhalten bleiben.

### Der Prüfungsdesktop

Bei Betriebssystemen mit grafischer Benutzeroberfläche wird die Interaktion mit den Benutzerinnen durch die Desktopumgebung realisiert. Die Desktopumgebung stellt die hinterste Fensterebene dar, auf der Programme gestartet und Dokumente geöffnet werden können. Üblicherweise stellt die Desktopumgebung ein Startmenü bereit, über das sämtliche Programme und Dokumente, die auf dem Computer zur Verfügung stehen, gestartet beziehungsweise geöffnet werden können.

Im Stand der Technik wird beim Betriebssystem "Windows" meist der "Explorer" als Desktopumgebung gestartet. Gelegentlich kommen auch Alternativen zum Einsatz, wie zum Beispiel der "Emerge-Desktop", "SharpEnviro" oder "LiteStep". Für das Betriebssystem "Linux" gibt es eine Vielzahl von Desktopumgebungen, zum Beispiel "KDE Plasma", "GNOME", "Xfce" oder "Cinnamon".

Desktop-Umgebungen werden üblicherweise für alle Benutzer eines Computers installiert und konfiguriert. Allerdings gibt es die Möglichkeit, einem Prüfungskonto über das zugehörige Benutzerprofil eine individuell ausgewählte Desktopumgebung zuzuweisen. Daher ist es im vorliegenden Fall möglich, den prüfungsspezifisch aufgesetzten Prüfungskonten über das zugehörige unveränderliche Benutzerprofil eine bestimmte Desktopumgebung zuzuordnen, nämlich den Prüfungsdesktop. Der Prüfungsdesktop ist dazu ausgelegt, die normale Desktopumgebung eines Prüfungsrechners zu ersetzen. Durch den Prüfungsdesktop wird auf zumindest einem der Prüfungsrechner eine abgesicherte Desktopumgebung bereitgestellt. In dieser Desktopumgebung können vorher festgelegte Programme, die während der Prüfung benötigt werden, gestartet und ausgeführt werden.

Eine wichtige Eigenschaft des Prüfungsdesktops ist, dass die Ausführung von Programmen, die für eine Prüfung nicht zugelassen sind, verhindert wird. Je nach Konfiguration des Prüfungsdesktops kann vorgesehen sein, dass überhaupt kein Startmenü angezeigt wird, in dem die installierten Programme eines Computers aufgelistet sind. Alternativ dazu kann das Startmenü so konfiguriert sein, dass nur ein reduziertes Startmenü angezeigt wird, das nur diejenigen Programme beinhaltet, die während einer bestimmten Prüfung gestartet werden dürfen. Darüber hinaus bleibt die in Windows bekannte Tastenkombination WIN+R, also die gemeinsame Betätigung von Windows-Taste und Buchstabe R, die zum Starten von Programmen verwendet werden kann, im Prüfungsdesktop wirkungslos.

Der Prüfungsdesktop kann so konfiguriert sein, dass alle Programme, die in einer Prüfung erlaubt sind, automatisch gestartet werden. Alternativ dazu kann auch vorgesehen sein, dass nur ein Teil dieser Programme automatisch gestartet wird.

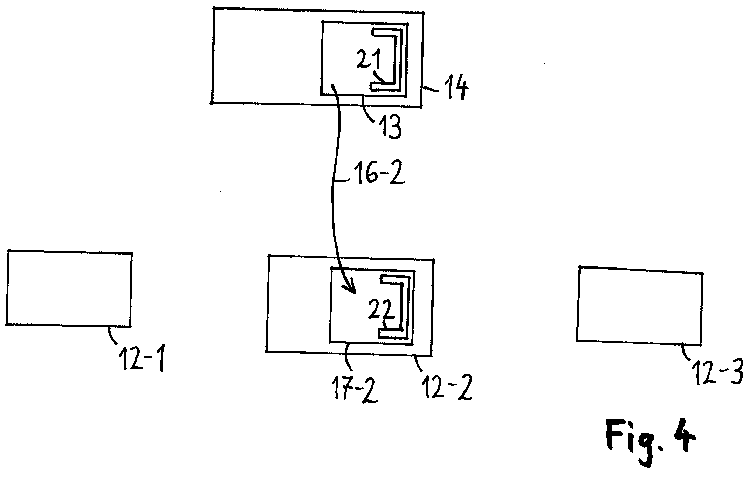

Der Prüfungsdesktop kann auf jedem der in Figur 3 gezeigten Prüfungsrechner 12-1, 12-2, 12-3 von vornherein installiert sein. Alternativ dazu kann vorgesehen sein, dass der Prüfungsdesktop als ausführbare Datei vom Prüfungsserver 14 zu den einzelnen Prüfungsrechnern 12-1, 12-2, 12-3 übertragen wird. Beispielsweise kann der Prüfungsdesktop im Benutzerprofil gespeichert sein und zusammen mit dem Benutzerprofil vom Server zu den Prüfungsrechnern heruntergeladen werden. In Figur 4 ist ein derartiges Ausführungsbeispiel gezeigt, bei dem auf dem Prüfungsserver 14 das unveränderliche Benutzerprofil 13 mit dem Prüfungsdesktop 21 gespeichert ist. Bei der Anmeldung oder nach der Anmeldung des Prüfungsrechners 12-2 über das Prüfungskonto A2 wird das Benutzerprofil 13 zusammen mit dem darin enthaltenen Prüfungsdesktop 21 vom Prüfungsserver 14 über die Datenverbindung 16-2 zum Prüfungsrechner 12-2 übermittelt. Auf dem Prüfungsrechner 12-2 wird eine lokale Kopie 17-2 des unveränderlichen Benutzerprofils gespeichert. Diese lokale Kopie 17-2 des unveränderlichen Benutzerprofils enthält auch den Prüfungsdesktop 22 als ausführbare Datei. Bei der Anmeldung oder nach der Anmeldung über das Prüfungskonto wird der Prüfungsdesktop 22 auf dem Prüfungsrechner 12-2 gestartet. Der Prüfungsdesktop 22 stellt auf dem Prüfungsrechner 12-2 eine abgesicherte Desktopumgebung für die Durchführung der Prüfung zur Verfügung.

Innerhalb des unveränderlichen Benutzerprofils 13 können darüber hinaus optional noch weitere Dateien vom Prüfungsserver 14 zu den Prüfungsrechnern 12-1, 12-2, 12-3 übertragen werden, beispielsweise eine oder mehrere Prüfungsdateien oder eine Datei mit Prüfungsaufgaben. Diese Dateien stehen dann ebenfalls auf Seiten der Prüfungsrechner 12-1, 12-2, 12-3 lokal zur Verfügung.

### Wächtereinrichtung auf den Prüfungsrechnern

Vorzugweise ist auf zumindest einem der Prüfungsrechner eine Wächtereinrichtung vorgesehen, die dazu ausgelegt ist, die Aktivitäten auf dem jeweiligen Prüfungsrechner während der Prüfung zu überwachen. Die Wächtereinrichtung ist dazu ausgelegt, mindestens eines von Systemzustand des Prüfungsrechners, Systemauslastung des Prüfungsrechners, gestartete Programme und Zustand von Netzwerkverbindungen des Prüfungsrechners zu überwachen. Beispielsweise kann die Wächtereinrichtung dazu ausgelegt sein, die während einer Prüfung laufenden Programme zu überwachen. Die Wächtereinrichtung kann beispielsweise regelmäßig die auf einem Prüfungsrechner laufenden Programme erfassen und abgleichen, ob auf dem Prüfungsrechner unerlaubte Programme laufen, die nicht für die jeweilige Prüfung zugelassen sind. In diesem Fall würde durch die Wächtereinrichtung eine konfigurierbare Reaktion ausgelöst, beispielsweise ein Eintrag in eine Protokolldatei oder das Sperren von Bildschirm, Tastatur und Maus des betroffenen Prüfungsrechners oder eine Benachrichtigung der Prüfungsaufsicht.

Zwar können durch den oben beschriebenen Prüfungsdesktop die während der Prüfung startbaren Programme auf eine vorgegebene Auswahl von Programmen beschränkt werden. Dennoch kann nicht verhindert werden, dass über ein erlaubtes Programm weitere Programme gestartet werden. Beispielsweise sind in integrierten Entwicklungsumgebungen wie beispielsweise "Eclipse" oder "Visual Studio" üblicherweise Menübefehle vorgesehen, über die andere Programme gestartet werden können. Derartige Entwicklungsumgebungen werden beispielsweise bei Programmierprüfungen eingesetzt.

Alternativ dazu oder zusätzlich kann die Wächtereinrichtung dazu ausgelegt sein, die Auslastung eines Prüfungs-PCs während der Prüfung zu überwachen und hierzu beispielsweise die CPU-Last, die Auslastung der lokalen Speichermedien, beispielsweise der Festplatte, sowie die Auslastung des Netzwerkdatenverkehrs zu überwachen. Wenn die ermittelten Kennzahlen für die Auslastung außerhalb des erwarteten Wertebereichs liegen, kann die Wächtereinrichtung eine konfigurierbare Reaktion auslösen, welche beispielsweise einen Eintrag in eine Protokolldatei, ein Sperren von Bildschirm, Tastatur und Maus oder eine Benachrichtigung der Prüfungsaufsicht umfassen kann.

Die Wächtereinrichtung kann als separate ausführbare Datei ausgebildet und im Benutzerprofil gespeichert sein. In diesem Fall wird die Wächtereinrichtung zusammen mit dem Prüfungsprofil vom Prüfungsserver zu den Prüfungsrechnern übertragen. Alternativ dazu kann die Wächtereinrichtung als in den Prüfungsdesktop integrierte Funktionalität ausgebildet sein.

### Dokumentation mittels redundanter Snapshot-Versionierung

Während der Prüfung werden von der Prüfungsteilnehmerln am Prüfungsrechner eine oder mehrere Prüfungsdateien erstellt und bearbeitet. Zur Dokumentation der Prüfungsdateien ist auf zumindest einem der Prüfungsrechner eine Versionsverwaltungseinrichtung wie beispielsweise GIT oder SVN vorgesehen, die gemäß einem vorher festgelegten zeitlichen Schema, beispielsweise in regelmäßigen zeitlichen Abständen, automatisch Schnappschüsse der Prüfungsdateien erstellt und auf der lokalen Festplatte des Prüfungsrechners abspeichert. Auf diese Weise wird zusätzlich zur letzten Version der Prüfungsdateien auch die gesamte Versionshistorie beim Erstellen der Prüfungsdateien dokumentiert. Wenn zu einem späteren Zeitpunkt festgestellt wird, dass die zuletzt gespeicherte Prüfungsdatei inkorrekt oder korrupt ist, kann problemlos auf einen der zuvor erzeugten Schnappschüsse zurückgegriffen werden. Auch wenn der Prüfungsrechner während eines Speichervorgangs abstürzt und die zuletzt gespeicherte Prüfungsdatei unbrauchbar wird, kann auf eine Vorgängerversion zurückgegriffen werden, sodass die Prüfung unter Umständen nach einem Reboot unter Berücksichtigung des aufgetretenen Zeitverlusts fortgesetzt werden könnte.

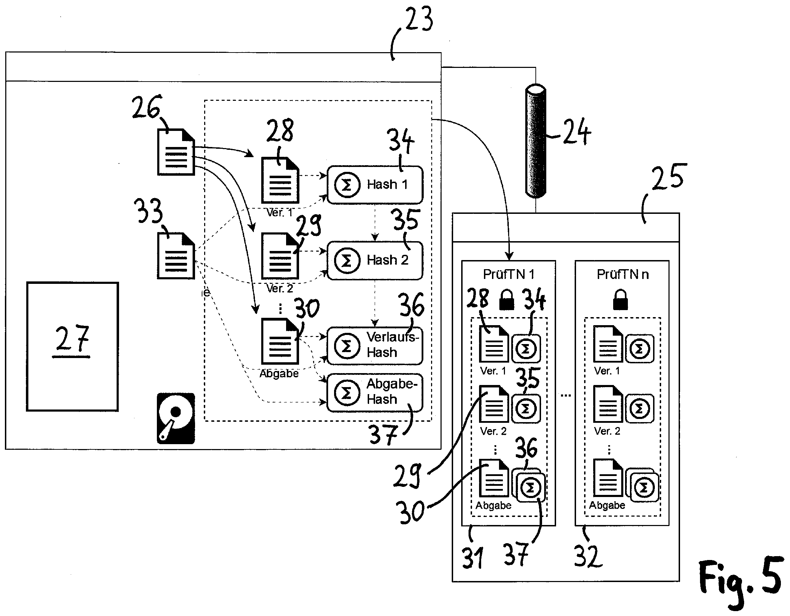

In Figur 5 ist das redundante Snapshot-Konzept, mit dem die Prüfungsdateien gesichert und dokumentiert werden, im Überblick dargestellt. In Figur 5 ist ein Prüfungsrechner 23 gezeigt, der über eine Datenverbindung 24 mit einem Prüfungsserver 25 verbunden ist. Während der Prüfung werden von einem Prüfungsteilnehmer ein oder mehrere Prüfungsdateien 26 erstellt und bearbeitet, die auf der lokalen Festplatte des Prüfungsrechners 23 gespeichert sind. Zur Dokumentation der Versionshistorie der Prüfungsdateien ist auf dem Prüfungsrechner 23 eine Versionsverwaltungseinrichtung 27 installiert, die dazu ausgelegt ist, gemäß einem vorgegebenen Zeitschema Schnappschüsse der Prüfungsdateien 26 zu erzeugen und diese Schnappschüsse der Prüfungsdateien jeweils auf der lokalen Festplatte des Prüfungsrechners 23 abzuspeichern. Wie in Figur 5 gezeigt ist, wird zu einem ersten Zeitpunkt eine erste Kopie 28 der Prüfungsdateien 26, zu einem zweiten Zeitpunkt eine zweite Kopie 29 der Prüfungsdateien 26 und zum Abgabezeitpunkt eine letzte Kopie 30 der Prüfungsdateien 26 erzeugt und auf der Festplatte des Prüfungsrechners abgelegt.

Bei der bislang beschriebenen lokalen Snapshot-Versionierung sind sowohl die Prüfungsdateien 26 als auch die Kopien 28, 29, 30 auf der lokalen Festplatte des Prüfungsrechners 23 gespeichert. Daher besteht die Gefahr, dass durch einen Defekt des Prüfungsrechners 23, beispielsweise bei einem Ausfall der lokalen Festplatte oder Hauptplatine, sämtliche Kopien 28, 29, 30 der Prüfungsdateien 26 verloren gehen. Um dies zu verhindern, werden die lokal auf dem Prüfungsrechner 23 gespeicherten Kopien 28, 29, 30 im Hintergrund automatisch über die Datenverbindung 24 zu einem externen Speichermedium oder beispielsweise zum Prüfungsserver 25 übertragen und dort gespeichert. Da auf dem Prüfungsserver 25 die Snapshot-Versionierungen aller Prüfungsteilnehmerinnen gespeichert werden, werden die Bereiche 31, 32 der verschiedenen Prüfungsteilnehmerlnnen auf dem Prüfungsserver 25 voneinander abgeschottet, was in Figur 4 durch das in jedem Bereich 31, 32 eingezeichnete Schloss veranschaulicht ist, sodass ein wechselseitiger Zugriff unterbunden wird. Im Bereich 31 des Prüfungsservers 25, der der Prüfungsteilnehmerln am Prüfungsrechner 23 zugeordnet ist, werden daher die erste Kopie 28, die zweite Kopie 29 sowie die letzte Kopie 30 der Prüfungsdatei abgespeichert. Dadurch wird eine Synchronisierung der Snapshot-Versionierung auf dem Prüfungsrechner 23 und dem Prüfungsserver 25 erreicht, sodass eine redundante und somit ausfallsichere Speicherung der verschiedenen Versionen der Prüfungsdateien ermöglicht wird. Die Übertragung der Schnappschüsse der Prüfungsdateien vom Prüfungsrechner 23 zum Prüfungsserver 25 wird regelmäßig und im Hintergrund durchgeführt. Dabei wird das regelmäßige Synchronisieren der lokalen Snapshot-Versionierung auf dem Prüfungsrechner 23 mit dem Prüfungsserver 25 fehlertolerant implementiert. Wenn der Vorgang nicht gestartet oder erfolgreich durchgeführt werden kann, wird nach einer vorgegebenen Zeit abgebrochen und der Vorgang wird zu einem späteren Zeitpunkt wiederholt. Auf diese Weise kann erreicht werden, dass die redundante Snapshot-Versionierung nach einer vorübergehenden Störung der Datenverbindung 24 wieder aufgenommen und fortgesetzt werden kann.

Um die inhaltliche Integrität der Kopien 28, 29, 30 der Prüfungsdateien zu gewährleisten, wird ein sogenannter Hashwert verwendet, der mithilfe einer kryptographischen Hashfunktion wie beispielsweise SHA1, SHA 256 oder einer anderen Hashfunktion erzeugt wird. Bei der Hashfunktion handelt es sich um eine nicht-umkehrbare Einweg-Hashfunktion, sodass es nicht möglich ist, aus einem Hashwert den Inhalt einer Prüfungsdatei zu rekonstruieren. Vorzugsweise wird für jede Kopie 28, 29, 30 der Prüfungsdateien ein zugehöriger Hashwert erzeugt. Dabei kann beispielsweise vorgesehen sein, auch persönliche Daten 33 der Prüfungsteilnehmerln bei der Bildung des Hashwerts mit einzubeziehen, wie dies in Figur 5 durch Pfeile veranschaulicht ist. Der Hashwert 34, der der Kopie 28 zugeordnet ist, wird also aus den in der Kopie 28 enthaltenen Prüfungsdateien und den persönlichen Daten 33 gebildet.

Vorzugsweise wird der Hashwert, der den einzelnen Kopien 28, 29, 30 der Prüfungsdateien zugeordnet ist, als Verlaufs-Hashwert gebildet, wobei nach dem ersten Hashwert in die Bildung des neuen Hashwerts zusätzlich der Hashwert einer vorherigen Snapshot-Version miteinbezogen wird. Bei der Bildung des Hashwerts 35, der der Kopie 29 zugeordnet ist, werden also der Hashwert 34 der vorherigen Kopie 28, die Kopie 29 sowie die persönlichen Daten 33 mit einbezogen. Entsprechend wird bei der Bildung des Hashwerts 36, der der Kopie 30 zugeordnet ist, der bisherige Hashwert 35, die Prüfungsdateien in der Kopie 30 sowie die persönlichen Daten 33 mit einbezogen. Der der letzten Kopie 30 zugeordnete Hashwert 36 ist daher ein eindeutiger, digitaler Fingerabdruck aller Prüfungsdateien, ihrer Zuordnung zu einer bestimmten Person sowie ihrer zeitlichen Entstehungsgeschichte von Beginn bis zum Ende einer Prüfung.

In Ergänzung zu dem Hashwert 36 kann zur letzten Kopie 30 der Prüfungsdateien zusätzlich ein Abgabe-Hashwert 37 gebildet werden. Der Abgabe-Hashwert 37 wird ohne den Hashwert der vorherigen Schnappschuss-Version gebildet. Bei der Bildung des Abgabe-Hashwerts 37 werden also die Prüfungsdateien der letzten Kopie 30 sowie die persönlichen Daten 33 miteinbezogen. Bei dem Abgabe-Hashwert 37 handelt es sich somit um einen eindeutigen digitalen Fingerabdruck aller Prüfungsdateien und ihrer Zuordnung zu ihrer bestimmten Person am Ende einer Prüfung, jedoch ohne die zeitliche Entstehungsgeschichte.

Zusammen mit den Kopien 28, 29, 30 werden auch die zugehörigen Hashwerte 34, 35, 36 sowie der Abgabe-Hashwert 37 vom Prüfungsrechner 23 zum Prüfungsserver 25 kopiert und dort im Bereich 31 abgespeichert. Insofern ist im Bereich 31 des Prüfungsservers 25 zu jeder Kopie 28, 29, 30 ein zugehöriger Hashwert 34, 35, 36 gespeichert, wobei zur letzten Kopie 30 zusätzlich ein Abgabe-Hashwert 37 gespeichert ist. Durch die Verlaufs-Hashwerte und den Abgabe-Hashwert wird der Inhalt der Prüfungsdateien abgesichert.

Um zusätzlich auch die Echtheit dieser beiden Hashwerte zu gewährleisten, kann beispielsweise unmittelbar nach dem Ende der Prüfung eine Abgabe-E-Mail, welche alle Verlaufs-Hashwerte sowie den Abgabe-Hashwert enthält, an einen vordefinierten Verteilerkreis geschickt werden. Durch ein Verteilen an möglichst viele unterschiedliche E-Mail-Empfänger entsteht eine Fälschungssicherheit. Selbst wenn eine Mailbox kompromittiert beziehungsweise eine E-Mail bezüglich der Abgabe-Hashwerte verändert wird, sind ausreichend viele weitere unabhängige Kopien im Umlauf, die höchstwahrscheinlich unverfälscht sind. Um das Zeitfenster für mögliche Manipulationen zu minimieren, wird die Abgabe-E-Mail unmittelbar nach dem Ende einer Prüfung beispielsweise durch den Prüfungsserver 25 automatisch erstellt und versendet.

### Ablauf einer computergestützten Prüfung

### Phase 1: Prüfung vorbereiten

Das Vorbereiten der Prüfung in Phase 1 erfolgt, bevor die Prüfungsteilnehmerlnnen den Prüfungsraum betreten. Zunächst werden die Prüfungscomputer eingeschaltet. Dies kann entweder manuell geschehen oder vom Prüfungsserver aus per Wake-on-LAN veranlasst werden. Optional kann anschließend das Internet blockiert werden, beispielsweise per Firewall, Routing oder durch das Aktivieren von VPN-Verbindungen zu den Prüfungsrechnern.

Falls die Prüfungskonten und/oder die Benutzerprofile deaktiviert sind, ist es notwendig, die Prüfungskonten und/oder die Benutzerprofile zu aktivieren, bevor die Anmeldungen der Prüfungskonten auf den Prüfungsrechnern vorgenommen werden. Aus Datenschutzgründen ist es vorteilhaft, die Prüfungskonten und/oder die Benutzerprofile zu deaktivieren, wenn keine Prüfung läuft.

Anschließend wird die Anmeldung der Prüfungskonten auf den Prüfungsrechnern durchgeführt. Um den Konfigurationsaufwand zu verringern, ist es vorteilhaft, die Anmeldung der Prüfungskonten auf den Prüfungsrechnern automatisiert vorzunehmen. Hierzu kann beispielsweise ein entsprechender Befehl vom Prüfungsserver aus per Fernzugriff an die Prüfungsrechner gesendet werden, beispielsweise ein Befehl gemäß einem der Standards SSH, PowerShell Remoting, Windows Management Interface (WMI). Alternativ oder zusätzlich kann für die Anmeldung der Prüfungsrechner beispielsweise ein Neustart der Prüfungsrechner initiiert werden.

Mit der Anmeldung oder nach der Anmeldung wird das unveränderliche Benutzerprofil, das mit jedem Prüfungskonto verknüpft ist, vom Prüfungsserver zu den einzelnen Prüfungsrechnern übertragen und lokal auf dem jeweiligen Prüfungsrechner abgespeichert. Damit steht auf den Prüfungsrechnern, die an der Prüfung beteiligt sind, eine lokale Kopie des benötigen unveränderlichen Benutzerprofils zur Verfügung. Innerhalb des unveränderlichen Benutzerprofils kann beispielsweise der Prüfungsdesktop als ausführbare Datei vom Prüfungsserver zu den Prüfungsrechnern übertragen und dort gestartet werden. Mit dem Start des Prüfungsdesktops wird auf den beteiligten Prüfungsrechnern eine abgesicherte Desktopumgebung zur Verfügung gestellt, die zur Durchführung der Prüfung benötigt wird.

Bis zum Start der Prüfung muss verhindert werden, dass mit den Programmen und Dateien auf den Prüfungsrechnern gearbeitet wird. Hierzu können beispielsweise die Eingaben von Eingabegeräten wie Maus, Tastatur oder Touchscreen blockiert oder umgeleitet werden, sodass Benutzereingaben bis zum Start der Prüfung verhindert werden. Alternativ oder zusätzlich dazu können beispielsweise die Displays, Bildschirme oder sonstigen Anzeigeeinheiten der Prüfungsrechner bis zum Start der Prüfung blockiert werden, was beispielsweise durch einen Bildschirmschoner oder durch ein Programm oder Fenster, das ständig im Vordergrund bleibt und die Sicht auf andere Anwendungen verwehrt, erfolgen kann. In einer bevorzugten Ausführungsform kann eine Eingabemaske für die persönlichen Daten der Teilnehmerinnen angezeigt werden.

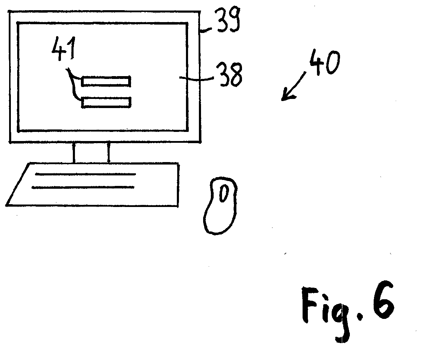

In Figur 6 ist eine derartige Eingabemaske 38 gezeigt, die vor dem Start der Prüfung auf einem Display 39 eines Rechners 40 angezeigt wird und mindestens ein Eingabefeld 41 aufweist, über das persönliche Daten der Teilnehmerln und/oder ein Startercode zum Starten der Prüfung eingegeben werden können. Diese Eingabemaske 38 wird im Vordergrund, also vor den anderen Programmen und Anwendungen, angezeigt und verdeckt somit die Sicht auf die anderen Programme und Anwendungen. Vorzugsweise handelt es sich bei der Eingabemaske 38 um eine ausbruchsichere, modale Eingabemaske. Bei einer derartigen Eingabemaske werden sämtliche Eingaben zum Beispiel per Maus, Tastatur, Touchscreen etc. an die Eingabemaske 38 gesendet. Dadurch wird ein Arbeiten mit Programmen, die bereits gestartet sind und von der Eingabemaske 38 verdeckt werden, verhindert, sodass vor dem Start der Prüfung eine Interaktion mit Programmen, Anwendungen und Dateien ausgeschlossen ist. Darüber hinaus ist die Eingabemaske als ausbruchsichere Eingabemaske ausgebildet, was bedeutet, dass die Prüfungsteilnehmerinnen die Eingabemaske nicht beenden, beseitigen oder wegklicken können. Vielmehr ist eine spezielle Aktion erforderlich, um die Eingabemaske 38 zu beenden und die Prüfung zu starten.

Zum Vorbereiten der Prüfung in der Phase 1 können gegebenenfalls die Programme oder zumindest ein Teil der Programme, die in der Prüfung verwendet werden sollen, bereits gestartet werden. Die oben beschriebene Wächtereinrichtung kann ebenfalls in Phase 1 gestartet werden. Ebenso ist es möglich, Prüfungsdateien bereits in dieser Phase vom Prüfungsserver auf die Prüfungsrechner zu kopieren und auf Seiten der Prüfungsrechner mit den den jeweiligen Prüfungsdateien zugeordneten Programmen zu öffnen.

### Phase 2: Plätze besetzen

Vorzugsweise betreten die Prüfungsteilnehmerinnen mit Beginn der Phase 2 den Prüfungsraum und finden fertig hochgestartete und angemeldete Computer vor, die die in Figur 6 gezeigte Eingabemaske 38 zur Eingabe der persönlichen Daten und/oder eines Startercodes anzeigen.

Mit der Einführung der Prüfungskonten ist nicht mehr festgelegt, welche Person mit welchem Prüfungskonto arbeitet. Die Zuordnung zwischen Prüfung, Person und Prüfungsrechner, also die Frage, welche Person bei welcher Prüfung an welchem Prüfungsrechner gesessen hat, kann mithilfe einer Liste oder eines Sitzplatzplanes festgehalten werden. Das Erstellen der Liste beziehungsweise des Sitzplatzplanes kann während der Prüfung erfolgen oder vor der Prüfung vorbereitet werden und während der Prüfung beispielsweise durch eine Unterschrift bestätigt werden. Die Prüfungsaufsicht kann den Sitzplan und die persönlichen Daten kontrollieren, beispielsweise anhand eines Ausweises.

Für eine elektronische Auswertung der Prüfungsergebnisse ist es vorteilhaft, die Daten der Prüfungsteilnehmerinnen, wie beispielsweise Name, Geburtsdatum und Studiengang, auch digital zu erfassen und beispielsweise in einer Datei abzulegen. Zur Eingabe der persönlichen Dateien kann vorzugsweise die in Figur 6 gezeigte Eingabemaske 38 genutzt werden.,

### Phase 3: Prüfung starten

Das Starten der Prüfung und der Beginn der Bearbeitungszeit sollen für alle Prüfungsteilnehmerinnen unter kontrollierten Bedingungen ablaufen. Eine Möglichkeit hierfür ist, dass die Prüfungsaufsicht zu Beginn der Prüfung einen "Startercode" bekannt gibt, der von den Prüfungsteilnehmerinnen in die Eingabemaske eingetippt wird. Wenn der richtige Startercode eingegeben wird, wird die Prüfung auf dem jeweiligen Prüfungsrechner gestartet. Eine weitere Möglichkeit ist, dass ein spezieller Startbefehl vom Prüfungsserver aus per Fernzugriff über die Datenverbindungen an die Prüfungsrechner gesendet wird. Die Übermittlung des Startbefehls per Fernzugriff hat den Vorteil, dass die Prüfung auf allen Prüfungsrechnern synchron gestartet werden kann. Andere Ausführungsformen zum Starten der Prüfung sind ebenfalls möglich.

Die zur Vorbereitung der Prüfung erforderlichen Aktionen, wie beispielsweise das Starten des Prüfungsdesktops, das Starten der für die Prüfung benötigten Programme, das Kopieren von Aufgabenstellungen und Prüfungsdateien vom Prüfungsserver auf die Prüfungsrechner etc., können vorzugsweise bereits in Phase 1 beim Vorbereiten der Prüfung durchgeführt werden. Alternativ dazu können einige oder alle dieser Aktionen auch noch in Phase 3 nach dem Starten der Prüfung durchgeführt werden. Beispielsweise kann nach dem Start der Prüfung der Prüfungsdesktop gestartet und eine persönliche Arbeitsumgebung für die Teilnehmerinnen erstellt werden. Ebenso ist es auch nach dem Starten der Prüfung noch möglich, Dateien wie beispielsweise Aufgabenstellungen und Prüfungsdateien vom Prüfungsserver zu den Prüfungsrechnern zu übertragen und beispielsweise auch zu öffnen. Darüber hinaus ist es möglich, nach dem Start der Prüfung Software zu starten, die für die Ausführung der Prüfung benötigt wird, also beispielsweise Entwurfswerkzeuge oder Programmierumgebungen. Auch die oben beschriebene Wächtereinrichtung kann nach Beginn der Prüfung in Phase 3 gestartet werden.

Anschließend werden die Anzeigegeräte wie beispielsweise Bildschirme, Displays und andere Anzeigegeräte sowie die Eingabegeräte wie Maus, Tastatur, elektronischer Stift, Touchscreen usw. freigeschaltet. Ab diesem Zeitpunkt können die Prüfungsteilnehmer Eingaben tätigen und die Prüfungsaufgaben bearbeiten. Zu diesem Zeitpunkt beginnt auch die Bearbeitungszeit.

### Phase 4: Prüfung läuft

Während der zur Verfügung stehenden Bearbeitungszeit bearbeiten die Prüfungsteilnehmerinnen die gestellten Prüfungsaufgaben. Dies kann auch das Erstellen und Verändern von vordefinierten Prüfungsdateien, beispielsweise mittels eines Entwurfswerkzeugs oder einer Programmierumgebung umfassen. Die Arbeitsergebnisse können von den Teilnehmerinnen in der Desktopumgebung des Prüfungsrechners gespeichert werden. Alternativ oder zusätzlich können die verschiedenen Versionen der Prüfungsdateien mittels der oben beschriebenen redundanten Snapshot-Versionierung dokumentiert werden, bei der zu bestimmten Zeiten oder in bestimmten Situationen Schnappschüsse der Prüfungsdateien erstellt und auf dem lokalen Speichermedium des Prüfungsrechners abgespeichert und dann im Hintergrund zum Prüfungsserver übertragen werden.

Während der Prüfung können auf den Prüfungsrechnern verschiedene Informationen wie beispielsweise die aktuelle Uhrzeit, die bereits verstrichene und/oder die verbleibende Bearbeitungszeit dargestellt werden. Zusätzlich können beispielsweise zu bestimmten Zeitpunkten oder zu wiederkehrenden Zeitpunkten zusätzliche Informationen zur Prüfung als Anzeige auf dem Bildschirm, durch ein spezielles akustisches Signal, durch Sprachausgabe etc. bekanntgegeben werden. Beispielsweise kann angezeigt werden, dass noch eine gewisse Bearbeitungszeit verbleibt, beispielsweise noch 10 Minuten Bearbeitungszeit.

Während die Prüfung läuft, kann durch die Prüfungsaufsicht Einfluss auf den Ablauf der Prüfung genommen werden. Beispielsweise kann zum Ausgleich von ungeplanten Unterbrechungen und Störungen oder als Nachteilsausgleich die Prüfungszeit verlängert werden. Vorzugsweise werden derartige Änderungen über den Prüfungsserver oder über den Steuerrechner vorgenommen, wobei die Einflussnahme vorteilhafterweise mit einem Passwort gesichert ist. Während der Prüfung besteht für die Prüfungsteilnehmerinnen die Möglichkeit, die Prüfung von sich aus zu beenden, beispielsweise durch einen Klick auf eine Schaltfläche "Prüfung beenden".

### Phase 5: Prüfung beenden

Nach Ablauf der Bearbeitungszeit kann die Prüfung durch das Computersystem selbst, durch die Prüfungsaufsicht oder durch die Prüfungsteilnehmerinnen beendet werden. Beispielsweise kann vorgesehen sein, dass der Prüfungsserver bei Zeitablauf einen Befehl zum Beenden der Prüfung an sämtliche Prüfungsrechner übermittelt. Alternativ dazu kann die Prüfung auch vom Prüfungsserver oder vom Steuerrechner aus durch die Prüfungsaufsicht beendet werden, indem eine entsprechende Schaltfläche angeklickt wird. Eine weitere Möglichkeit ist, dass auf Seiten der Prüfungsrechner die Prüfungsteilnehmerinnen die Prüfung auf Anweisung der Prüfungsaufsicht beenden.

Mit dem Beenden der Prüfung werden auf Seiten der Prüfungsrechner weitere Benutzereingaben unmöglich gemacht. Hierzu werden Eingaben über Eingabemittel, wie beispielsweise Tastatur, Maus, Touchscreen etc., gesperrt und nicht mehr zu den Programmen weitergeleitet. Zusätzlich können beispielsweise die Anzeigemittel, also beispielsweise der Bildschirm, das Display oder andere Anzeigemittel, ausgeschaltet oder verdunkelt werden. Anschließend werden sämtliche prüfungsrelevanten Dateien an eine vorher festgelegte Stelle kopiert, beispielsweise auf den Prüfungsserver oder in ein bestimmtes Verzeichnis auf dem jeweiligen Prüfungsrechner. Vorzugsweise werden die Prüfungsdateien in ein Verzeichnis mit speziellen Zugriffsrechten kopiert. Weiter vorzugsweise wird zu den Prüfungsdateien ein Echtheitszertifikat erstellt und abgespeichert, welches beispielsweise eine Prüfsumme, einen Hashwert oder eine digitale Signatur umfassen kann. Außerdem können beispielsweise spezielle Schreibschutzrechte für die Prüfungsdateien vorgesehen werden.

Darüber hinaus kann im Rahmen der weiter oben beschriebenen redundanten Snapshot-Versionierung beim Beenden der Prüfung ein letzter Schnappschuss erstellt und zusammen mit einem Verlaufs-Hashwert und einem Abgabe-Hashwert lokal auf dem jeweiligen Prüfungsrechner gespeichert werden. Zusätzlich wird dieser letzte Schnappschuss zusammen mit dem Verlaufs-Hashwert und dem Abgabe-Hashwert zum Prüfungsserver übertragen und dort abgespeichert.

Auf den Prüfungsrechnern laufende Software wird beendet. Prüfungskonten an den Prüfungsrechnern werden abgemeldet, wobei diese Abmeldung vorzugsweise ferngesteuert durch einen vom Prüfungsserver zu den Prüfungsrechnern übertragenen Befehl erfolgt. Beim Abmelden der Prüfungskonten wird auch die lokal auf dem Prüfungsrechner gespeicherte Kopie des unveränderlichen Benutzerprofils zusammen mit den darin gespeicherten Dateien gelöscht. Die Prüfungsdateien auf dem Prüfungsrechner können dabei entweder gelöscht oder in einem gesonderten Verzeichnis mit speziellen Zugriffsrechten abgelegt werden. Um eine nachträgliche Einflussnahme auf die Prüfung zu verhindern, ist es vorteilhaft, die Prüfungskonten nach dem Abmelden zu deaktivieren oder zu löschen. Die Prüfungsrechner können anschließend ausgeschaltet oder neu gestartet werden. Eine unmittelbare Anmeldung mit einem weiteren Prüfungskonto oder einem normalen Benutzerkonto ist ebenfalls möglich.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Ein Computersystem, welches einen Server (1, 14, 25) und mindestens einen Prüfungsrechner (2-1, 2-2, 2-3, 12-1, 12-2, 12-3, 23) aufweist, wobei der mindestens eine Prüfungsrechner (2-1, 2-2, 2-3, 12-1, 12-2, 12-3, 23) über mindestens eine Datenverbindung (3-1, 3-2, 3-3, 16-1, 16-2, 16-3, 24) mit dem Server (1, 14, 25) verbindbar ist,
wobei auf dem Server (1, 14, 25) ein unveränderliches Benutzerprofil (6, 13, 15) gespeichert ist,
wobei das unveränderliche Benutzerprofil (6, 13, 15) einen Prüfungsdesktop (9, 21, 22) in Form einer ausführbaren Datei umfasst sowie eine Konfigurationsdatenstruktur (8) umfasst, in der der Prüfungsdesktop (9, 21, 22) als zu verwendende Desktopumgebung spezifiziert ist,
wobei auf zumindest einem der Prüfungsrechner (2-1, 2-2, 2-3, 12-1, 12-2, 12-3, 23) ein Prüfungskonto angelegt ist, das einer durchzuführenden Prüfung zugeordnet ist, wobei das Prüfungskonto mit dem unveränderlichen Benutzerprofil (6, 13, 15) verknüpft ist, wobei das Prüfungskonto oder eine damit assoziierte Datenstruktur oder zumindest einer der Prüfungsrechner (2-1, 2-2, 2-3, 12-1, 12-2, 12-3, 23) so konfiguriert ist, dass beim Anmelden oder nach dem Anmelden über das Prüfungskonto das unveränderliche Benutzerprofil (6, 13, 15) von dem Server (1, 14, 25) heruntergeladen und eine Kopie (17-1, 17-2, 17-3, 20-1, 20-2, 20-3) des Benutzerprofils auf dem jeweiligen Prüfungsrechner (2-1, 2-2, 2-3, 12-1, 12-2, 12-3, 23) oder einem damit verbundenen Speichermedium gespeichert wird, wobei beim Anmelden oder nach dem Anmelden über das Prüfungskonto der Prüfungsdesktop (9, 21, 22) zusammen mit dem Benutzerprofil (6, 13, 15) von dem Server (1, 14, 25) herunterladbar ist,
wobei die Konfigurationsdatenstruktur (8) dazu ausgelegt ist, dass beim Anmelden oder nach dem Anmelden über das Prüfungskonto der Prüfungsdesktop (9, 21, 22) auf dem jeweiligen Prüfungsrechner (2-1, 2-2, 2-3, 12-1, 12-2, 12-3, 23) gestartet wird,
wobei der Prüfungsdesktop (9, 21, 22) so ausgebildet ist, dass die durch den Prüfungsdesktop (9, 21, 22) startbaren Programme auf eine konfigurierbare Menge von erlaubten Programmen eingeschränkt sind.

2. Computersystem nach Anspruch 1, **dadurch gekennzeichnet, dass** das Prüfungskonto oder eine damit assoziierte Datenstruktur oder zumindest einer der Prüfungsrechner so konfiguriert ist, dass beim Abmelden oder nach dem Abmelden über das Prüfungskonto die Kopie des Benutzerprofils auf dem jeweiligen Prüfungsrechner oder einem damit verbundenen Speichermedium gelöscht wird.

3. Computersystem nach Anspruch 1 oder Anspruch 2, **dadurch gekennzeichnet, dass** das Prüfungskonto oder eine damit assoziierte Datenstruktur oder zumindest einer der Prüfungsrechner so konfiguriert ist, dass beim Abmelden oder nach dem Abmelden über das Prüfungskonto die Kopie des Benutzerprofils einschließlich sämtlicher Daten und Dateien, die innerhalb der Kopie des Benutzerprofils abgespeichert sind, auf dem jeweiligen Prüfungsrechner oder einem damit verbundenen Speichermedium gelöscht wird.

4. Computersystem nach einem der Ansprüche 1 bis 3, **dadurch gekennzeichnet, dass** zumindest einer der Prüfungsrechner oder das unveränderliche Benutzerprofil eine Wächtereinrichtung umfasst, die dazu ausgelegt ist, während einer Prüfung mindestens eines von Systemzustand des Prüfungsrechners, Systemauslastung des Prüfungsrechners, gestartete Programme und Zustand von Netzwerkverbindungen des Prüfungsrechners zu überwachen.

5. Computersystem nach einem der Ansprüche 1 bis 4, **dadurch gekennzeichnet, dass** auf zumindest einem der Prüfungsrechner oder im unveränderlichen Benutzerprofil eine Versionsverwaltungseinrichtung vorgesehen ist, die dazu ausgelegt ist, gemäß eines zeitlichen Schemas mindestens einen von folgenden Speicherprozessen durchzuführen:
- mindestens eine Kopie von mindestens einer auf dem jeweiligen Prüfungsrechner bearbeiteten Prüfungsdatei auf dem jeweiligen Prüfungsrechner oder einem damit verbundenen Speichermedium zu speichern,
- mindestens eine auf dem jeweiligen Prüfungsrechner bearbeitete Prüfungsdatei zum Server zu übertragen.

6. Ein Verfahren zum Bereitstellen einer vordefinierten Desktopumgebung auf mindestens einem Prüfungsrechner (2-1, 2-2, 2-3, 12-1, 12-2, 12-3, 23) in einem Computersystem, welches den mindestens einen Prüfungsrechner (2-1, 2-2, 2-3, 12-1, 12-2, 12-3, 23) sowie einen Server (1, 14, 25) umfasst, wobei der mindestens eine Prüfungsrechner (2-1, 2-2, 2-3, 12-1, 12-2, 12-3, 23) über mindestens eine Datenverbindung (3-1, 3-2, 3-3, 16-1, 16-2, 16-3, 24) mit dem Server (1, 14, 25) verbindbar ist,
wobei auf dem Server (1, 14, 25) ein unveränderliches Benutzerprofil (6, 13, 15) gespeichert ist,
wobei das unveränderliche Benutzerprofil (6, 13, 15) einen Prüfungsdesktop (9, 21, 22) in Form einer ausführbaren Datei umfasst sowie eine Konfigurationsdatenstruktur (8) umfasst, in der der Prüfungsdesktop (9, 21, 22) als zu verwendende Desktopumgebung spezifiziert ist,
wobei auf zumindest einem der Prüfungsrechner (2-1, 2-2, 2-3, 12-1, 12-2, 12-3, 23) ein Prüfungskonto angelegt ist, das einer durchzuführenden Prüfung zugeordnet ist, wobei das Prüfungskonto mit dem unveränderlichen Benutzerprofil (6, 13, 15) verknüpft ist, wobei das Verfahren die Schritte umfasst:
Anmelden über das jeweilige Prüfungskonto an zumindest einem der Prüfungsrechner (2-1, 2-2, 2-3, 12-1, 12-2, 12-3, 23), wobei beim Anmelden oder nach dem Anmelden über das Prüfungskonto das unveränderliche Benutzerprofil (6, 13, 15) von dem Server (1, 14, 25) heruntergeladen und eine Kopie (17-1, 17-2, 17-3, 20-1, 20-2, 20-3) des Benutzerprofils auf dem jeweiligen Prüfungsrechner (2-1, 2-2, 2-3, 12-1, 12-2, 12-3, 23) oder einem damit verbundenen Speichermedium gespeichert wird, wobei beim Anmelden oder nach dem Anmelden über das Prüfungskonto der Prüfungsdesktop (9, 21, 22) zusammen mit dem Benutzerprofil (6, 13, 15) von dem Server (1, 14, 25) heruntergeladen wird,
Starten des Prüfungsdesktops (9, 21, 22) auf dem jeweiligen Prüfungsrechner (2-1, 2-2, 2-3, 12-1, 12-2, 12-3, 23) beim Anmelden oder nach dem Anmelden über das Prüfungskonto, wobei der Prüfungsdesktop (9, 21, 22) so ausgebildet ist, dass die durch den Prüfungsdesktop startbaren Programme auf eine konfigurierbare Menge von erlaubten Programmen eingeschränkt sind.

7. Verfahren zum Vorbereiten einer computergestützten Prüfung in einem Computersystem,
wobei das Computersystem einen Server (1, 14, 25) und mindestens einen Prüfungsrechner (2-1, 2-2, 2-3, 12-1, 12-2, 12-3, 23) aufweist, wobei der mindestens eine Prüfungsrechner (2-1, 2-2, 2-3, 12-1, 12-2, 12-3, 23) über mindestens eine Datenverbindung (3-1, 3-2, 3-3, 16-1, 16-2, 16-3, 24) mit dem Server (1, 14, 25) verbindbar ist,
wobei auf dem Server (1, 14, 25) ein unveränderliches Benutzerprofil (6, 13, 15) gespeichert ist,
wobei das unveränderliche Benutzerprofil (6, 13, 15) eine Konfigurationsdatenstruktur (8) umfasst, in der ein Prüfungsdesktop (9, 21, 22) als zu verwendende Desktopumgebung spezifiziert ist,
wobei das Verfahren umfasst:
auf zumindest einem der Prüfungsrechner (2-1, 2-2, 2-3, 12-1, 12-2, 12-3, 23), Anlegen eines Prüfungskontos, das einer durchzuführenden Prüfung zugeordnet ist,
Verknüpfen des Prüfungskontos mit dem unveränderliches Benutzerprofil (6, 13, 15), das auf dem Server (1, 14, 25) gespeichert ist,
Initiieren, vom Server (1, 14, 25) aus per Fernzugriff an zumindest einem der Prüfungsrechner (2-1, 2-2, 2-3, 12-1, 12-2, 12-3, 23), einer Anmeldung über das jeweilige Prüfungskonto,
beim Anmelden oder nach dem Anmelden über das jeweilige Prüfungskonto, Herunterladen eines unveränderlichen Benutzerprofils (6, 13, 15) vom Server (1, 14, 25) zum jeweiligen Prüfungsrechner (2-1, 2-2, 2-3, 12-1, 12-2, 12-3, 23) und Speichern einer Kopie (17-1, 17-2, 17-3, 20-1, 20-2, 20-3) des Benutzerprofils auf dem jeweiligen Prüfungsrechner (2-1, 2-2, 2-3, 12-1, 12-2, 12-3, 23) oder einem damit verbundenen Speichermedium.

8. Verfahren nach Anspruch 7, **dadurch gekennzeichnet, dass** das unveränderliche Benutzerprofil den Prüfungsdesktop in Form einer ausführbaren Datei umfasst, wobei beim Anmelden oder nach dem Anmelden über das Prüfungskonto der Prüfungsdesktop zusammen mit dem Benutzerprofil von dem Server heruntergeladen und eine Kopie des Benutzerprofils auf dem jeweiligen Prüfungsrechner oder einem damit verbundenen Speichermedium gespeichert wird.

9. Verfahren nach Anspruch 7 oder Anspruch 8, **dadurch gekennzeichnet, dass** das Verfahren mindestens eines von folgenden umfasst:
einen Schritt des Startens der Prüfung auf zumindest einem der Prüfungsrechner;
einen Schritt des Startens der Prüfung auf zumindest einem der Prüfungsrechner, wobei das Starten der Prüfung auf dem jeweiligen Prüfungsrechner das Eingeben eines Startcodes in eine Eingabemaske des jeweiligen Prüfungsrechners umfasst;
einen Schritt des Startens der Prüfung auf zumindest einem der Prüfungsrechner, wobei das Starten der Prüfung das Übertragen eines Startbefehls vom Server zu dem zumindest einen der Prüfungsrechner umfasst.

10. Verfahren nach einem der Ansprüche 7 bis 9, **dadurch gekennzeichnet, dass** das Verfahren mindestens eines von folgenden umfasst:
einen Schritt des Beendens der Prüfung auf zumindest einem der Prüfungsrechner;
einen Schritt des Beendens der Prüfung auf zumindest einem der Prüfungsrechner,
wobei das Beenden der Prüfung das Übertragen eines Beendigungsbefehls vom Server zu dem zumindest einen der Prüfungsrechner umfasst;
einen Schritt des Beendens der Prüfung auf zumindest einem der Prüfungsrechner,
wobei das Beenden der Prüfung das Übertragen eines Beendigungsbefehls vom Server zu dem zumindest einen der Prüfungsrechner umfasst, wobei der jeweilige Prüfungsrechner dazu ausgelegt ist, ab Empfang des Beendigungsbefehls keine Benutzereingaben zu dem mindestens einen gestarteten Programm mehr weiterzuleiten.

11. Verfahren nach einem der Ansprüche 7 bis 10, **dadurch gekennzeichnet, dass** beim Abmelden oder nach dem Abmelden über das Prüfungskonto die Kopie des Benutzerprofils auf dem jeweiligen Prüfungsrechner oder einem damit verbundenen Speichermedium gelöscht wird.

12. Verfahren nach einem der Ansprüche 7 bis 11, **dadurch gekennzeichnet, dass** beim Abmelden oder nach dem Abmelden über das Prüfungskonto die Kopie des Benutzerprofils einschließlich sämtlicher Daten und Dateien, die innerhalb der Kopie des Benutzerprofils abgespeichert sind, auf dem jeweiligen Prüfungsrechner oder einem damit verbundenen Speichermedium gelöscht wird.

13. Ein Computersystem,
welches einen Server (1, 14, 25) und mindestens einen Prüfungsrechner (2-1, 2-2, 2-3, 12-1, 12-2, 12-3, 23) aufweist, wobei der mindestens eine Prüfungsrechner (2-1, 2-2, 2-3, 12-1, 12-2, 12-3, 23) über mindestens eine Datenverbindung (3-1, 3-2, 3-3, 16-1, 16-2, 16-3, 24) mit dem Server (1, 14, 25) verbindbar ist,
wobei auf dem Server (1, 14, 25) ein unveränderliches Benutzerprofil (6, 13, 15) gespeichert ist, welches eine Konfigurationsdatenstruktur (8) umfasst, in der ein Prüfungsdesktop (9, 21, 22) als zu verwendende Desktopumgebung spezifiziert ist,
wobei auf zumindest einem der Prüfungsrechner (2-1, 2-2, 2-3, 12-1, 12-2, 12-3, 23) ein Prüfungskonto angelegt ist, das einer durchzuführenden Prüfung zugeordnet ist, wobei das Prüfungskonto mit dem unveränderlichen Benutzerprofil (6, 13, 15) verknüpft ist, wobei der Server (1, 14, 25) dazu ausgelegt ist, per Fernzugriff an zumindest einem der Prüfungsrechner (2-1, 2-2, 2-3, 12-1, 12-2, 12-3, 23) eine Anmeldung über das jeweilige Prüfungskonto zu initiieren,
wobei das Prüfungskonto oder eine damit assoziierte Datenstruktur oder zumindest einer der Prüfungsrechner (2-1, 2-2, 2-3, 12-1, 12-2, 12-3, 23) so konfiguriert ist, dass beim Anmelden oder nach dem Anmelden über das Prüfungskonto das unveränderliche Benutzerprofil (6, 13, 15) von dem Server (1, 14, 25) heruntergeladen und eine Kopie (17-1, 17-2, 17-3, 20-1, 20-2, 20-3) des Benutzerprofils auf dem jeweiligen Prüfungsrechner (2-1, 2-2, 2-3, 12-1, 12-2, 12-3, 23) oder einem damit verbundenen Speichermedium gespeichert wird.

## Claims

1. A computer system comprising a server (1, 14, 25) and at least one exam computer (2-1, 2-2, 2-3, 12-1, 12-2, 12-3, 23), the at least one exam computer (2-1, 2-2, 2-3, 12-1, 12-2, 12-3, 23) being connectable to the server (1, 14, 25) by means of at least one data connection (3-1, 3-2, 3-3, 16-1, 16-2, 16-3, 24),
an unalterable user profile (6, 13, 15) being saved on the server (1, 14, 25),
the unalterable user profile (6, 13, 15) comprising an exam desktop (9, 21, 22) in the form of an executable file and comprising a configuration data structure (8) in which the exam desktop (9, 21, 22) is specified as a desktop environment to be used,
an exam account being established on at least one of the exam computers (2-1, 2-2, 2-3, 12-1, 12-2, 12-3, 23) and associated with an exam to be performed, the exam account being linked to the unalterable user profile (6, 13, 15),
the exam account or a data structure associated therewith or at least one of the exam computers (2-1, 2-2, 2-3, 12-1, 12-2, 12-3, 23) being configured such that the unalterable user profile (6, 13, 15) is downloaded from the server (1, 14, 25) when logging in or after logging in by means of the exam account and a copy (17-1, 17-2, 17-3, 20-1, 20-2, 20-3) of the user profile being saved on the associated exam computer (2-1, 2-2, 2-3, 12-1, 12-2, 12-3, 23) or a storage medium connected thereto, the exam desktop (9, 21, 22) being downloadable from the server (1, 14, 25) together with the user profile (6, 13, 15) when logging in or after logging in by means of the exam account, the configuration data structure (8) being implemented for launching the exam desktop (9, 21, 22) on the associated exam computer (2-1, 2-2, 2-3, 12-1, 12-2, 12-3, 23) when logging in or after logging in by means of the exam account,
the exam desktop (9, 21, 22) being implemented such that the programs able to be launched by the exam desktop (9, 21, 22) are limited to a configurable set of allowed programs.

2. The computer system according to claim 1, **characterized in that** the exam account or a data structure associated therewith or at least one of the exam computers is configured such that when logging out or after logging out by means of the exam account, the copy of the user profile on the corresponding exam computer or a storage medium connected thereto is deleted.

3. The computer system according to claim 1 or claim 2, **characterized in that** the exam account or a data structure associated therewith or at least one of the exam computers is configured such that when logging out or after logging out by means of the exam account, the copy of the user profile on the corresponding exam computer or a storage medium connected thereto, including all data and files saved within the copy of the user profile, is deleted.

4. The computer system according to any one of the claims 1 through 3, **characterized in that** at least one of the exam computers or the unalterable user profile comprises a monitoring unit implemented for monitoring during an exam at least one of the system state of the exam computer, the utilized system capacity of the exam computer, launched programs, and the state of the network connections of the exam computer.

5. The computer system according to any one of the claims 1 through 4, **characterized in that** a version control unit is provided on at least one of the exam computers or in the unalterable user profile and is implemented for performing at least one of the following memory processes according to a time sequence:
- saving on the corresponding exam computer, or on a storage medium connected thereto, at least one copy of at least one exam file processed on the corresponding exam computer,
- transferring to the server at least one exam file processed on the corresponding exam computer.

6. A method for providing a predefined desktop environment on at least one exam computer (2-1, 2-2, 2-3, 12-1, 12-2, 12-3, 23) in a computer system,
comprising the at least one exam computer (2-1, 2-2, 2-3, 12-1, 12-2, 12-3, 23) and a server (1, 14, 25), the at least one exam computer (2-1, 2-2, 2-3, 12-1, 12-2, 12-3, 23) being connectable to the server (1, 14, 25) by means of at least one data connection (3-1, 3-2, 3-3, 16-1, 16-2, 16-3, 24),
an unalterable user profile (6, 13, 15) being saved on the server (1, 14, 25),
the unalterable user profile (6, 13, 15) comprising an exam desktop (9, 21, 22) in the form of an executable file and comprising a configuration data structure (8) in which the exam desktop (9, 21, 22) is specified as a desktop environment to be used,
an exam account being established on at least one of the exam computers (2-1, 2-2, 2-3, 12-1, 12-2, 12-3, 23) and associated with an exam to be performed, the exam account being linked to the unalterable user profile (6, 13, 15),
the method comprising the steps:
logging in by means of the corresponding exam account to at least one of the exam computers (2-1, 2-2, 2-3, 12-1, 12-2, 12-3, 23), the unalterable user profile (6, 13, 15) being downloaded from the server (1, 14, 25) when logging in or after logging in by means of the exam account and a copy (17-1, 17-2, 17-3, 20-1, 20-2, 20-3) of the user profile being saved on the associated exam computer (2-1, 2-2, 2-3, 12-1, 12-2, 12-3, 23) or a storage medium connected thereto, the exam desktop (9, 21, 22) being downloaded from the server (1, 14, 25) together with the user profile (6, 13, 15) when logging in or after logging in by means of the exam account,
launching the exam desktop (9, 21, 22) on the corresponding exam computer (2-1, 2-2, 2-3, 12-1, 12-2, 12-3, 23) when logging in or after logging in by means of the exam account, the exam desktop (9, 21, 22) being implemented such that the programs able to be launched by the exam desktop are limited to a configurable set of allowed programs.

7. A method for preparing a computer-based exam in a computer system,
the computer system comprising a server (1, 14, 25) and at least one exam computer (2-1, 2-2, 2-3, 12-1, 12-2, 12-3, 23), the at least one exam computer (2-1, 2-2, 2-3, 12-1, 12-2, 12-3, 23) being connectable to the server (1, 14, 25) by means of at least one data connection (3-1, 3-2, 3-3, 16-1, 16-2, 16-3, 24),
an unalterable user profile (6, 13, 15) being saved on the server (1, 14, 25),
the unalterable user profile (6, 13, 15) comprising a configuration data structure (8) in which an exam desktop (9, 21, 22) is specified as a desktop environment to be used, the method comprising the steps:
establishing an exam account on at least one of the exam computers (2-1, 2-2, 2-3, 12-1, 12-2, 12-3, 23) and associated with an exam to be performed,
linking the exam account to the unalterable user profile (6, 13, 15) saved on the server (1, 14, 25),
initiating from the server (1, 14, 25), by means of remote access, a login by means of the corresponding exam account to at least one of the exam computers (2-1, 2-2, 2-3, 12-1, 12-2, 12-3, 23),
downloading an unalterable user profile (6, 13, 15) from the server (1, 14, 25) to the corresponding exam computer (2-1, 2-2, 2-3, 12-1, 12-2, 12-3, 23) when logging in or after logging in by means of the corresponding exam account, and saving a copy (17-1, 17-2, 17-3, 20-1, 20-2, 20-3) of the user profile on the corresponding exam computer (2-1, 2-2, 2-3, 12-1, 12-2, 12-3, 23) or a storage medium connected thereto.

8. The method according to claim 7, **characterized in that** the unalterable user profile comprises the exam desktop in the form of an executable file, wherein the exam desktop together with the user profile is downloaded from the server when logging in or after logging in by means of the exam account and a copy of the user profile is saved on the associated exam computer or a storage medium connected thereto.

9. The method according to claim 7 or claim 8, **characterized in that** the method comprises at least one of the following:
a step of launching the exam on at least one of the exam computers;
a step of launching the exam on at least one of the exam computers, wherein the launching of the exam on the corresponding exam computer comprises entering a launch code on an input screen of the corresponding exam computer;
a step of launching the exam on at least one of the exam computers, wherein launching the exam comprises transferring a launch command from the server to the at least one of the exam computers.

10. The method according to any one of the claims 7 through 9, **characterized in that** the method comprises at least one of the following:
a step of terminating the exam on at least one of the exam computers;
a step of terminating the exam on at least one of the exam computers, wherein
terminating the exam comprises transferring a termination command from the server to the at least one of the exam computers;
a step of terminating the exam on at least one of the exam computers, wherein
terminating the exam comprises transferring a termination command from the server to the at least one of the exam computers, wherein the corresponding exam computer is implemented for not forwarding any further user inputs to the at least one launched program after the termination command is received.

11. The method according to any one of the claims 7 through 10, **characterized in that** the copy of the user profile on the corresponding exam computer or a storage medium connected thereto is deleted when logging out or after logging out by means of the exam account.

12. The method according to any one of the claims 7 through 11, **characterized in that** the copy of the user profile on the corresponding exam computer or a storage medium connected thereto, including all data and files saved within the copy of the user profile, is deleted when logging out or after logging out by means of the exam account.

13. A computer system
comprising a server (1, 14, 25) and at least one exam computer (2-1, 2-2, 2-3, 12-1, 12-2, 12-3, 23), the at least one exam computer (2-1, 2-2, 2-3, 12-1, 12-2, 12-3, 23) being connectable to the server (1, 14, 25) by means of at least one data connection (3-1, 3-2, 3-3, 16-1, 16-2, 16-3, 24),
an unalterable user profile (6, 13, 15) comprising a configuration data structure (8) in which an exam desktop (9, 21, 22) is specified as a desktop environment to be used is saved on the server (1, 14, 25),
an exam account being established on at least one of the exam computers (2-1, 2-2, 2-3, 12-1, 12-2, 12-3, 23) and associated with an exam to be performed, the exam account being linked to the unalterable user profile (6, 13, 15),
the server (1, 14, 25) being implemented for initiating, by means of remote access, a login by means of the corresponding exam account to at least one of the exam computers (2-1, 2-2, 2-3, 12-1, 12-2, 12-3, 23),
the exam account or a data structure associated therewith or at least one of the exam computers (2-1, 2-2, 2-3, 12-1, 12-2, 12-3, 23) being configured such that the unalterable user profile (6, 13, 15) is downloaded from the server (1, 14, 25) when logging in or after logging in by means of the exam account and a copy (17-1, 17-2, 17-3, 20-1, 20-2, 20-3) of the user profile being saved on the associated exam computer (2-1, 2-2, 2-3, 12-1, 12-2, 12-3, 23) or a storage medium connected thereto.

## Revendications

1. Système d'ordinateur, qui comprend un serveur (1, 14, 25) et au moins un ordinateur d'examen (2-1, 2-2, 2-3, 12-1, 12-2, 12-3, 23), ledit au moins un ordinateur d'examen (2-1, 2-2, 2-3, 12-1, 12-2, 12-3, 23) pouvant être connecté au serveur (1, 14, 25) via au moins une connexion de données (3-1, 3-2, 3-3, 16-1, 16-2, 16-3, 24),
un profil d'utilisateur (6, 13, 15) invariable étant enregistré sur le serveur (1, 14, 25),
le profil d'utilisateur (6, 13, 15) invariable comprenant un bureau d'examen (9, 21, 22) sous la forme d'un fichier exécutable ainsi qu'une structure de données de configuration (8) dans laquelle le bureau d'examen (9, 21, 22) est spécifié comme environnement de bureau à utiliser,
un compte d'examen étant créé sur au moins l'un des ordinateurs d'examen (2-1, 2-2, 2-3, 12-1, 12-2, 12-3, 23), qui est associé à un examen à effectuer, le compte d'examen étant lié au profil d'utilisateur (6, 13, 15) invariable,
le compte d'examen ou une structure de données associée à celui-ci ou au moins l'un des ordinateurs d'examen (2-1, 2-2, 2-3, 12-1, 12-2, 12-3, 23) étant configuré(e) de sorte que, lors de l'entrée en session ou après l'entrée en session via le compte d'examen, le profil d'utilisateur (6, 13, 15) invariable est téléchargé depuis le serveur (1, 14, 25) et une copie (17-1, 17-2, 17-3, 20-1, 20-2, 20-3) du profil d'utilisateur est enregistrée sur l'ordinateur d'examen respectif (2-1, 2-2, 2-3, 12-1, 12-2, 12-3, 23) ou sur un support de stockage connecté à celui-ci, le bureau d'examen (9, 21, 22) pouvant être téléchargé avec le profil d'utilisateur (6, 13, 15) depuis le serveur (1, 14, 25) lors de l'entrée en session ou après l'entrée en session via le compte d'examen,
la structure de données de configuration (8) étant conçue pour que le bureau d'examen (9, 21, 22) soit lancé sur l'ordinateur d'examen respectif (2-1, 2-2, 2-3, 12-1, 12-2, 12-3, 23) lors de l'entrée en session ou après l'entrée en session via le compte d'examen,
le bureau d'examen (9, 21, 22) étant conçu de sorte que les programmes pouvant être lancés par le bureau d'examen (9, 21, 22) sont limités à un nombre configurable de programmes autorisés.

2. Système d'ordinateur selon la revendication 1, **caractérisé en ce que** le compte d'examen ou une structure de données associée à celui-ci, ou au moins l'un des ordinateurs d'examen, est configuré(e) de sorte que, lors de la clôture de session ou après la clôture de session via le compte d'examen, la copie du profil d'utilisateur est supprimée sur l'ordinateur d'examen respectif ou sur un support de stockage connecté à celui-ci.

3. Système d'ordinateur selon la revendication 1 ou la revendication 2, **caractérisé en ce que** le compte d'examen ou une structure de données associée à celui-ci ou au moins l'un des ordinateurs d'examen est configuré(e) de sorte que, lors de la clôture de session ou après la clôture de session via le compte d'examen, la copie du profil d'utilisateur, y compris toutes les données et tous les fichiers qui sont stocké(e)s au sein de la copie du profil d'utilisateur, est supprimée sur l'ordinateur d'examen respectif ou sur un support de stockage connecté à celui-ci.

4. Système d'ordinateur selon l'une quelconque des revendications 1 à 3, **caractérisé en ce qu'**au moins l'un des ordinateurs d'examen ou le profil d'utilisateur invariable comprend un dispositif de surveillance qui est configuré pour surveiller, pendant un examen, au moins l'un(e) parmi l'état du système de l'ordinateur d'examen, l'utilisation du système de l'ordinateur d'examen, les programmes lancés et l'état des connexions réseau de l'ordinateur d'examen.

5. Système d'ordinateur selon l'une quelconque des revendications 1 à 4, **caractérisé en ce qu'**il est prévu, sur au moins l'un des ordinateurs d'examen ou dans le profil d'utilisateur invariable, un dispositif de gestion de versions qui est conçu pour exécuter, selon un schéma temporel, au moins l'un des processus de mémoire suivants :
- enregistrer, sur l'ordinateur d'examen respectif ou sur un support de stockage connecté à celui-ci, au moins une copie d'au moins un fichier d'examen traité sur l'ordinateur d'examen respectif,
- transférer au serveur au moins un fichier d'examen traité sur l'ordinateur d'examen respectif.

6. Procédé pour fournir un environnement de bureau prédéfini sur au moins un ordinateur d'examen (2-1, 2-2, 2-3, 12-1, 12-2, 12-3, 23) dans un système d'ordinateur,
lequel comprend le, au moins un, ordinateur d'examen (2-1, 2-2, 2-3, 12-1, 12-2, 12-3, 23) ainsi qu'un serveur (1, 14, 25), ledit au moins un ordinateur d'examen (2-1, 2-2, 2-3, 12-1, 12-2, 12-3, 23) pouvant être connecté au serveur (1, 14, 25) via au moins une connexion de données (3-1, 3-2, 3-3, 16-1, 16-2, 16-3, 24),
un profil d'utilisateur (6, 13, 15) invariable étant enregistré sur le serveur (1, 14, 25),
le profil d'utilisateur (6, 13, 15) invariable comprenant un bureau d'examen (9, 21, 22) sous la forme d'un fichier exécutable ainsi qu'une structure de données de configuration (8) dans laquelle le bureau d'examen (9, 21, 22) est spécifié comme environnement de bureau à utiliser,
un compte d'examen étant créé sur au moins l'un des ordinateurs d'examen (2-1, 2-2, 2-3, 12-1, 12-2, 12-3, 23), qui est associé à un examen à effectuer, le compte d'examen étant lié au profil d'utilisateur (6, 13, 15) invariable,
le procédé comprenant les étapes suivantes :
entrée en session via le compte d'examen respectif sur au moins l'un des ordinateurs d'examen (2-1, 2-2, 2-3, 12-1, 12-2, 12-3, 23), sachant que, lors de l'entrée en session ou après l'entrée en session via le compte d'examen, le profil d'utilisateur (6, 13, 15) invariable est téléchargé depuis le serveur (1, 14, 25) et une copie (17-1, 17-2, 17-3, 20-1, 20-2, 20-3) du profil d'utilisateur est enregistrée sur l'ordinateur d'examen respectif (2-1, 2-2, 2-3, 12-1, 12-2, 12-3, 23) ou sur un support de stockage connecté à celui-ci, le bureau d'examen (9, 21, 22) étant téléchargé avec le profil d'utilisateur (6, 13, 15) depuis le serveur (1, 14, 25) lors de l'entrée en session ou après l'entrée en session via le compte d'examen,
démarrage du bureau d'examen (9, 21, 22) sur l'ordinateur d'examen (2-1, 2-2, 2-3, 12-1, 12-2, 12-3, 23) respectif lors de l'entrée en session ou après l'entrée en session via le compte d'examen, le bureau d'examen (9, 21, 22) étant conçu de sorte que les programmes pouvant être lancés par le bureau d'examen sont limités à un nombre configurable de programmes autorisés.

7. Procédure pour préparer un examen sur ordinateur dans un système d'ordinateur, le système d'ordinateur comprenant un serveur (1, 14, 25) et au moins un ordinateur d'examen (2-1, 2-2, 2-3, 12-1, 12-2, 12-3, 23), ledit au moins un ordinateur d'examen (2-1, 2-2, 2-3, 12-1, 12-2, 12-3, 23) pouvant être connecté au serveur (1, 14, 25) via au moins une connexion de données (3-1, 3-2, 3-3, 16-1, 16-2, 16-3, 24),
un profil d'utilisateur (6, 13, 15) invariable étant enregistré sur le serveur (1, 14, 25), le profil d'utilisateur (6, 13, 15) invariable comprenant une structure de données de configuration (8) dans laquelle un bureau d'examen (9, 21, 22) est spécifié comme environnement de bureau à utiliser,
le procédé comprenant :
créer, sur au moins l'un des ordinateurs d'examen (2-1, 2-2, 2-3, 12-1, 12-2, 12-3, 23), un compte d'examen qui est associé à un examen à effectuer,
associer le compte d'examen au profil d'utilisateur (6, 13, 15) invariable qui est enregistré sur le serveur (1, 14, 25),
déclencher, à partir du serveur (1, 14, 25), par accès à distance à au moins l'un des ordinateurs d'examen (2-1, 2-2, 2-3, 12-1, 12-2, 12-3, 23), une entrée en session via le compte d'examen respectif,
télécharger, lors de l'entrée en session ou après l'entrée en session via le compte d'examen respectif, un profil d'utilisateur (6, 13, 15) invariable depuis le serveur (1, 14, 25) vers l'ordinateur d'examen (2-1, 2-2, 2-3, 12-1, 12-2, 12-3, 23) respectif et enregistrer une copie (17-1, 17-2, 17-3, 20-1, 20-2, 20-3) du profil d'utilisateur sur l'ordinateur d'examen (2-1, 2-2, 2-3, 12-1, 12-2, 12-3, 23) respectif ou sur un support de stockage connecté à celui-ci.

8. Procédé selon la revendication 7, **caractérisé en ce que** le profil d'utilisateur invariable comprend le bureau d'examen sous la forme d'un fichier exécutable, sachant que, lors de l'entrée en session ou après l'entrée en session via le compte d'examen, le bureau d'examen est téléchargé avec le profil d'utilisateur à partir du serveur et une copie du profil d'utilisateur est enregistrée sur l'ordinateur d'examen respectif ou sur un support de stockage connecté à celui-ci.

9. Procédé selon la revendication 7 ou la revendication 8, **caractérisé en ce que** le procédé comprend au moins l'une des étapes suivantes :
une étape consistant à lancer l'examen sur au moins l'un des ordinateurs d'examen ;
une étape consistant à lancer l'examen sur au moins l'un des ordinateurs d'examen, le lancement de l'examen sur l'ordinateur d'examen respectif comprenant la saisie d'un code de lancement dans un masque de saisie de l'ordinateur d'examen respectif ;
une étape consistant à lancer l'examen sur au moins l'un des ordinateurs d'examen, le lancement de l'examen comprenant la transmission d'une instruction de lancement depuis le serveur à l'au moins un des ordinateurs d'examen.

10. Procédé selon l'une quelconque des revendications 7 à 9, **caractérisé en ce que** le procédé comprend au moins l'une des étapes suivantes :
une étape consistant à mettre fin à l'examen sur au moins l'un des ordinateurs d'examen ;
une étape consistant à mettre fin à l'examen sur au moins l'un des ordinateurs d'examen, la cessation de l'examen comprenant la transmission d'une instruction de cessation depuis le serveur à l'au moins un des ordinateurs d'examen ;
une étape consistant à mettre fin à l'examen sur au moins l'un des ordinateurs d'examen, la cessation de l'examen comprenant la transmission d'une instruction de cessation depuis le serveur à l'au moins un des ordinateurs d'examen, l'ordinateur d'examen respectif étant conçu pour ne plus transmettre de saisies d'utilisateur à l'au moins un programme lancé à partir de la réception de l'instruction de cessation.

11. Procédé selon l'une quelconque des revendications 7 à 10, **caractérisé en ce que**, lors de la clôture de session ou après la clôture de session via le compte d'examen, la copie du profil d'utilisateur est supprimée sur l'ordinateur d'examen respectif ou sur un support de stockage connecté à celui-ci.

12. Procédé selon l'une quelconque des revendications 7 à 11, **caractérisé en ce que**, lors de la clôture de session ou après la clôture de session via le compte d'examen, la copie du profil d'utilisateur, y compris toutes les données et tous les fichiers qui sont stocké(e)s au sein de la copie du profil d'utilisateur, est supprimée sur l'ordinateur d'examen respectif ou sur un support de stockage connecté à celui-ci.

13. Système d'ordinateur,
qui comprend un serveur (1, 14, 25) et au moins un ordinateur d'examen (2-1, 2-2, 2-3, 12-1, 12-2, 12-3, 23), ledit au moins un ordinateur d'examen (2-1, 2-2, 2-3, 12-1, 12-2, 12-3, 23) pouvant être connecté au serveur (1, 14, 25) via au moins une connexion de données (3-1, 3-2, 3-3, 16-1, 16-2, 16-3, 24),
un profil d'utilisateur (6, 13, 15) invariable étant enregistré sur le serveur (1, 14, 25), lequel profil d'utilisateur comprend une structure de données de configuration (8) dans laquelle un bureau d'examen (9, 21, 22) est spécifié comme environnement de bureau à utiliser,
un compte d'examen étant créé sur au moins l'un des ordinateurs d'examen (2-1, 2-2, 2-3, 12-1, 12-2, 12-3, 23), qui est associé à un examen à effectuer, le compte d'examen étant lié au profil d'utilisateur (6, 13, 15) invariable,
le serveur (1, 14, 25) étant conçu pour, par accès à distance à au moins l'un des ordinateurs d'examen (2-1, 2-2, 2-3, 12-1, 12-2, 12-3, 23), déclencher une entrée en session via le compte d'examen respectif,
le compte d'examen ou une structure de données associée à celui-ci ou au moins l'un des ordinateurs d'examen (2-1, 2-2, 2-3, 12-1, 12-2, 12-3, 23) étant configuré(e) de sorte que, lors de l'entrée en session ou après l'entrée en session via le compte d'examen, le profil d'utilisateur (6, 13, 15) invariable est téléchargé depuis le serveur (1, 14, 25) et une copie (17-1, 17-2, 17-3, 20-1, 20-2, 20-3) du profil d'utilisateur est enregistrée sur l'ordinateur d'examen (2-1, 2-2, 2-3, 12-1, 12-2, 12-3, 23) respectif ou sur un support de stockage connecté à celui-ci.
